(19) **Europäisches Patentamt**
**European Patent Office**
**Office européen des brevets**

(11) **EP 3 190 008 B1**

(12) # FASCICULE DE BREVET EUROPEEN

(45) Date de publication et mention
de la délivrance du brevet:
**24.04.2019 Bulletin 2019/17**

(51) Int Cl.:
**B60R 19/38** *(2006.01)*  **B62D 47/00** *(2006.01)*
**B62D 53/00** *(2006.01)*

(21) Numéro de dépôt: **17154119.6**

(22) Date de dépôt: **29.01.2014**

(54) **PROCEDE DE COMMANDE D'UN CONVOI AUTOMOBILE ROUTIER POUR REALISER UN DÉPLACEMENT EN MARCHE ARRIÈRE**

VERFAHREN ZUR STEUERUNG EINER KRAFTFAHRZEUGKOLONNE ZUM DURCHFÜHREN EINER BEWEGUNG IM RÜCKWÄRTSGANG

METHOD FOR CONTROLLING A CONVOY OF ROAD MOTOR VEHICLES IN ORDER TO PERFORM A REVERSE MOVEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2013 FR 1352128**

(43) Date de publication de la demande:
**12.07.2017 Bulletin 2017/28**

(62) Numéro(s) de document de la (des) demande(s) initiale(s) en application de l'article 76 CBE:
**14701996.2 / 2 964 512**

(73) Titulaires:
• **Commissariat à l'énergie atomique et aux énergies alternatives
75015 Paris (FR)**
• **Metacar Transport Systems
38000 Grenoble (FR)**

(72) Inventeurs:
• **CERVANTES, Valery
38000 GRENOBLE (FR)**
• **LABORDE, Jérôme
69003 LYON (FR)**

(74) Mandataire: **Colombo, Michel
Innovation Competence Group
310, avenue Berthelot
69372 Lyon Cedex 08 (FR)**

(56) Documents cités:
**FR-A1- 2 696 391     US-A- 5 417 300**

**EP 3 190 008 B1**

## Description

L'invention concerne un procédé de commande d'un convoi automobile routier pour réaliser un déplacement en marche arrière et est définie par l'objet de la revendication 1.

On connaît des véhicules automobiles routiers articulés aptes à être attachés entre eux par des attelages sans degré de liberté en rotation en lacet pour former des convois routiers automobiles à trajectoire monotrace. Un tel convoi est apte à être piloté par un unique conducteur. Le brevet EP-1046574-B1 (WILLIAM M.C. RENDALL) décrit un exemple de tels véhicules pour un système de mobilité urbaine.

Avec ce type de véhicule, il est possible de fournir un convoi automobile routier formé de premier et second véhicules attachés entre eux. Le premier véhicule est placé en tête du convoi automobile. La tête du convoi désigne l'extrémité du convoi automobile vers laquelle se déplace le convoi automobile lorsque le convoi se déplace en marche avant. La marche avant correspond à un sens de déplacement opposé à celui de la marche arrière. Le second véhicule est attaché derrière le premier véhicule. Le premier véhicule comprend :

-   au moins trois roues aptes à faire rouler le premier véhicule sur une route plane, réparties entre un trains avant et un train milieu de roues ;
-   un premier châssis, comportant :

    •   une première partie avant sur laquelle est fixée le train avant ;
    •   une première partie arrière sur laquelle est fixée le train milieu ;
    •   un premier dispositif d'articulation, interposé entre les premières parties avant et arrière du châssis, ce premier dispositif d'articulation permettant à la première partie avant de pivoter, par rapport à la première partie arrière, autour d'un premier axe d'articulation normal à un plan de roulement du premier véhicule, de manière à modifier un angle d'articulation $\theta_1$ du premier véhicule, ce plan de roulement étant défini comme étant le plan passant par les surfaces
        de contact entre la route et les roues du premier véhicule.

Le déposant connaît également un convoi automobile dans lequel le premier véhicule comporte en plus un premier dispositif de direction, apte à modifier, en réponse à une commande d'un conducteur du premier véhicule, un angle de braquage $\varphi$ de chaque roue du train avant. Ce premier dispositif de direction est apte à être actionné indépendamment du premier dispositif d'articulation. Ce premier dispositif de direction présente un déport de chasse strictement inférieur, en valeur absolue, au tiers de la plus petite distance séparant le premier axe d'articulation d'un axe transversal du train avant lorsque l'axe transversal du train avant est parallèle à un axe transversal du train milieu. L'axe transversal d'un train de roues est défini comme étant :

-   l'axe passant par le centre géométrique de la surface de contact entre la route et les roues du train de roues lorsque ce train comporte plus d'une roue et que ces roues ne sont pas braquées, et
-   l'axe parallèle à l'axe de roulement d'une roue et passant par le centre géométrique de la surface de contact entre la route et cette roue, si le train de roues comporte uniquement cette roue et que cette roue n'est pas braquée.

Le second véhicule comprend :

-   au moins trois roues aptes à faire rouler le second véhicule sur une route plane, réparties entre le trains milieu et un train arrière de roues ;
-   un second châssis, comportant :

    •   une seconde partie avant sur laquelle est fixée le train milieu;
    •   une seconde partie arrière sur laquelle est fixée le train arrière ;
    •   un second dispositif d'articulation, interposé entre les secondes parties avant et arrière du second châssis, ce second dispositif d'articulation permettant à la seconde partie avant de pivoter, par rapport à la seconde partie arrière, autour d'un second axe d'articulation normal à un plan de roulement du second véhicule, de manière à modifier un angle d'articulation $\theta_2$ du second véhicule, ce plan de roulement étant défini comme étant le plan passant par les surfaces de contact entre la route et les roues du second véhicule.

La seconde partie avant est attachée mécaniquement, sans degré de liberté en rotation en lacet, à la première partie arrière, et alignée avec la première partie arrière.
Un procédé de commande d'un tel convoi automobile routier peut notamment comporter le déplacement du convoi en marche arrière.

De l'état de la technique est également connu des documents suivants :

- WO2007/10062 A2 (RENDALL WILLIAM MICHAEL) ;
- US 5417300 A (SCHULTZ RICHARD E) ;
- WO 98/40263 (TOIT CHARL WILHELMUS DU).

Pour un conducteur peu habitué, un tel convoi formé d'un premier et d'un second véhicules attelés entre eux est difficile à manoeuvrer en marche arrière.

Pour remédier à cet inconvénient, l'invention propose un procédé de commande d'un tel convoi automobile routier pour réaliser un déplacement en marche arrière conforme à la revendication 1.

Grâce au procédé revendiqué, le convoi automobile routier se conduit en marche arrière de façon simplifiée, dans la mesure où tous les trains de roues du convoi ont une trajectoire centrée sur le même centre instantané de rotation, comme c'est le cas pour un véhicule automobile standard à deux essieux et dépourvu de dispositif d'articulation.

Les modes de réalisation de ce procédé peuvent présenter une ou plusieurs des caractéristiques des revendications dépendantes.

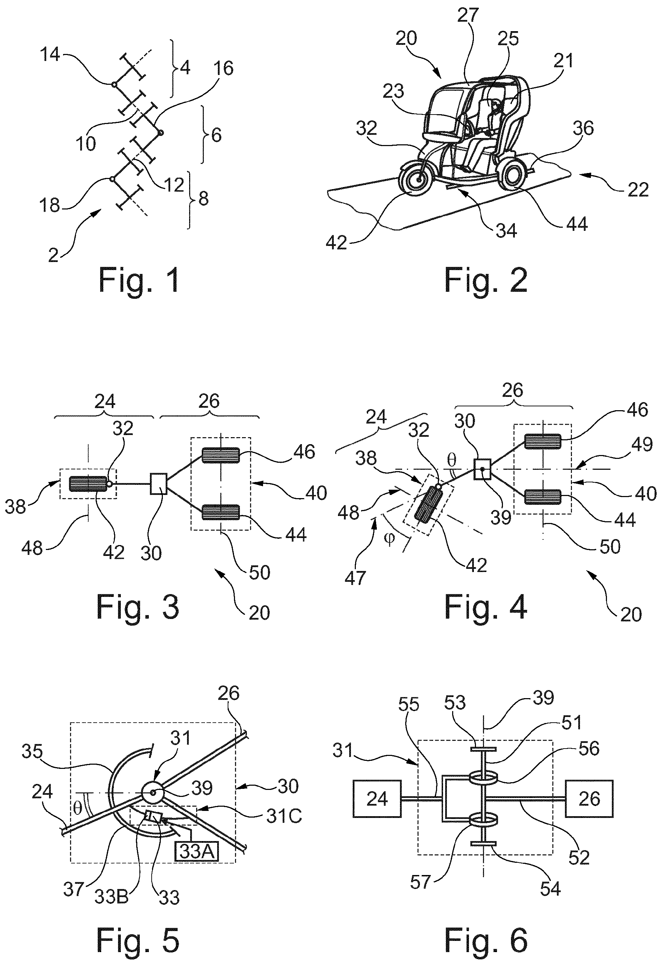

Le convoi de EP-1046574-B1 peut être formé avec une compacité accrue. Ces véhicules présentent cependant des inconvénients. Notamment, un convoi automobile routier formé de ces véhicules présente une manoeuvrabilité limitée lorsque le véhicule situé en tête du convoi doit être braqué sur place, par exemple, pour sortir d'une place de stationnement et s'engager dans une file de circulation. En effet, un braquage sur place du train avant du véhicule situé en tête du convoi engendre un contre-braquage du train arrière de ce véhicule. Ce contre-braquage se propage aux autres véhicules du convoi routier automobile, conduisant à un pliage « en accordéon » du convoi. La figure 1 représente schématiquement un tel convoi 2 plié en accordéon. Ce convoi 2 est ici formé de trois véhicules automobiles 4, 6, 8, identiques et attachés entre eux par des attelages 10, 12 sans degré de liberté en rotation en lacet. Les dispositifs de direction (assurés ici par des dispositifs d'articulations de châssis) 14, 16, 18 respectifs de chacun de ces véhicules 4, 6, 8 sont braqués dans des sens opposés deux à deux. À cause de ce pliage en accordéon du convoi, il faut exercer un effort très important sur le dispositif de direction du véhicule de tête pour effectuer un braquage sur place pour changer de file de circulation. En effet, l'effort à exercer correspond à celui nécessaire pour braquer les roues du véhicule de tête auquel s'ajoute l'effort nécessaire pour plier en accordéon le convoi. Ceci rend son déplacement difficile.

Il existe donc aussi un besoin pour un véhicule automobile routier articulé attelable, dont l'attelage ne présente pas de degré de liberté en rotation en lacet, ce véhicule présentant une manoeuvrabilité accrue en situation de braquage sur place lorsqu'il est attaché avec d'autres véhicules automobiles pour former un convoi automobile routier. Bien qu'une solution a cet inconvénient soit décrite dans cette demande, celle-ci n'est pas protégée par cette demande.

Dans cette description, on nomme « véhicule articulé » un véhicule automobile comportant le dispositif d'articulation.

Par rotation en lacet, on désigne ici un mouvement de rotation uniquement autour d'un axe perpendiculaire au plan de roulement du véhicule. Le plan de roulement d'un véhicule est défini comme le plan passant par les surfaces de contact entre les roues du véhicule et la route sur la quelle circule ce véhicule.

L'attelage est dit être sans degré de liberté si, lorsque deux attelages avant et arrière sont attelés entre eux, l'angle maximal de rotation en lacet de ces attelages l'un par rapport à l'autre dû aux jeux mécaniques est inférieur à 10° ou à 5° ou à 3° ou à 2°.

En équipant le train avant du véhicule d'un dispositif de direction, actionnable indépendamment du dispositif d'articulation, le véhicule peut être manoeuvré sur place sans provoquer de contre-braquage du train arrière. L'effort requis pour braquer sur place le véhicule de tête du convoi est alors considérablement réduit, puisque l'utilisation du dispositif de direction de ce véhicule n'entraîne pas un pliage en accordéon du convoi.

Des modes de réalisation décrit ici du véhicule attelable présentent en outre les avantages suivants :

- la position équidistante de l'axe instantané de rotation de l'articulation des parties de chassis avant et arrière par rapport aux axes transversaux des trains de roues du véhicule permet l'inscription dans une seule trace de la trajectoire en courbe de chaque véhicule suiveur d'un convoi routier comportant plusieurs de ces véhicules attachés entre eux, les véhicules suiveurs étant les véhicules du convoi situés derrière le véhicule en tête du convoi ; on parle alors de convoi « monotrace » ;
- les trains avant et arrière emboîtables entre eux permettent de réduire l'espace séparant deux véhicules automobiles attachés entre eux, et donc de réduire l'encombrement d'un convoi routier formé de véhicules attachés entre eux ;
- en emboîtant les trains avant et arrière de sorte que leurs axes transversaux soient confondus, le ripage des roues de ces trains de roues dans une trajectoire courbe est éliminé.
- la faible valeur du déport de chasse du train avant limite l'effort mécanique à appliquer pour braquer ce train avant à l'aide du dispositif de direction ;
- la configuration des butées mécaniques, pour obtenir un plus petit rayon de braquage du dispositif de direction du véhicule de tête supérieur au plus petit rayon de braquage engendré par les dispositifs d'articulation des autres véhicules permet la formation d'un convoi formé de véhicules attachés entre eux et présentant des empattements différents, tout en réduisant le risque de blocage de ce convoi routier à cause du blocage en butée du dispositif d'articulation d'un de ces véhicules ;

- en attachant l'habitacle sur la partie avant du véhicule, et en fixant le siège conducteur dans l'habitacle, on évite que le volant, de ce véhicule se déplace par rapport au conducteur lorsque le convoi tourne. Ainsi, on évite qu'un conducteur ou un occupant de l'habitacle ne soit blessé par un mouvement du volant.

L'invention sera mieux comprise à la lecture de la description qui va suivre, donnée uniquement à titre d'exemple non limitatif et faite en se référant aux dessins sur lesquels :

- la figure 1 est une illustration schématique, en vue de dessus, d'un convoi routier automobile plié en accordéon suite à une manoeuvre de braquage sur place ;
- la figure 2 représente schématiquement en perspective un véhicule automobile routier attelable ;
- les figures 3 et 4 représentent schématiquement, selon une vue de dessus, une géométrie des trains de roues avant et arrière du véhicule de la figure 2 ;
- la figure 5 représente schématiquement un exemple d'un dispositif d'articulation entre des parties avant et arrière de châssis du véhicule de la figure 2 ;
- la figure 6 représente schématiquement, selon une vue de profil, une articulation mécanique du dispositif d'articulation de la figure 5 ;
- les figures 7 et 8 représentent schématiquement des attelages avant et arrière du véhicule de la figure 2 ;
- la figure 9 représente schématiquement, selon une vue de face, le train arrière de roues du véhicule de la figure 2 ;
- la figure 10 représente schématiquement, selon une vue de face, le train avant de roues et le dispositif de direction du véhicule de la figure 2 ;
- la figure 11 représente schématiquement, selon une vue de profil, le déport de chasse du dispositif de direction et le train avant de roues de la figure 10 ;
- les figures 12 et 13 représentent schématiquement, respectivement en vues de profil et de dessus, un convoi routier automobile comportant le véhicule de la figure 2 ;
- la figure 14 représente schématiquement l'agencement des trains de roues du convoi routier des figures 12 et 13 le long d'une trajectoire courbe ;
- la figure 15 est un organigramme d'un procédé de commande du dispositif de direction du véhicule de la figure 2 ;
- la figure 16 représente schématiquement, en vue de dessus, une autre disposition des trains de roues de véhicules attachés entre eux pour former le convoi de la figure 13;
- les figures 17 à 19 représentent schématiquement, en vue de dessus, des variantes du dispositif d'articulation de la figure 5 ;
- la figure 20 représente schématiquement, selon une vue de dessus, un autre mode de réalisation du dispositif de direction de la figure 10 lorsque le train avant du véhicule de la figure 2 comporte plus d'une roue ;
- les figures 21 et 22 représentent schématiquement un convoi routier automobile formé de deux véhicules automobiles attelables de la figure 2 attachés entre eux ;
- la figure 23 représente schématiquement un exemple de définition d'un train de roues équivalent d'un train de roues du véhicule automobile de la figure 2 ;
- la figure 24 est un organigramme d'un procédé de réalisation d'un braquage en marche arrière avec le convoi de la figure 20.

Dans ces figures, les mêmes références sont utilisées pour désigner les mêmes éléments.

Dans la suite de cette description, les caractéristiques et fonctions bien connues de l'homme du métier ne sont pas décrites en détails.

Les figures 2 à 4 représentent un véhicule automobile 20 routier attelable. Ce véhicule 20 est apte à se déplacer sur une route 22 (figure 2), par exemple plane. Ici, cette route 22 est plane et horizontale. Dans cet exemple, ce véhicule 20 comporte :

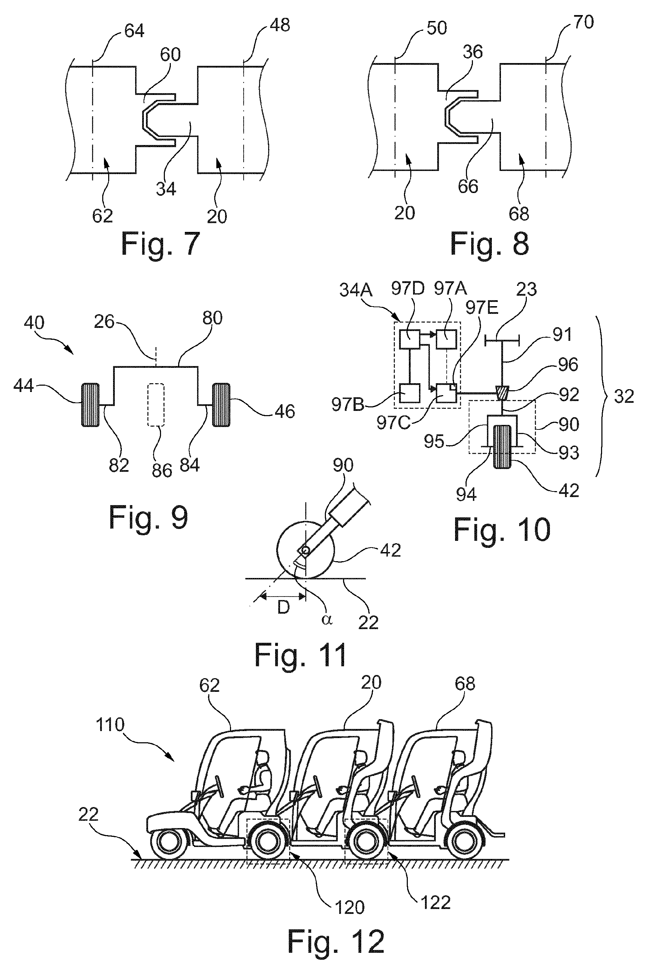

- trois roues ;
- un châssis, incluant des parties avant 24 et arrière 26 (figures 3 et 4);
- des dispositifs d'articulation 30 et de direction 32 (figures 3 et 4);
- des attelages avant 34 et arrière 36 (figures 7 et 8);
- un moteur, tel qu'un moteur électrique, apte à propulser le véhicule 20.

Le véhicule 20 est piloté par un conducteur. A cet effet, le véhicule 20 comporte un siège conducteur 21 et un poste de conduite. Ce poste de conduite inclut des commandes du moteur et un volant directionnel 23 pour diriger le véhicule 20. Ce véhicule 20 comporte ici également un siège passager 25. Le poste de conduite et le siège conducteur 21 sont ici fixés à l'intérieur d'un habitacle 27 du véhicule 20. L'habitacle 27 est solidaire sans degré de liberté en lacet de la partie 24 et repose ici entièrement sur cette partie 24. Ainsi, l'habitacle 27 et la partie avant 24 du châssis se déplacent en même temps. L'habitacle 27 n'est pas raccordé mécaniquement directement à la partie 26. L'habitacle 27 se déplace donc en lacet par rapport à la partie arrière 26 du châssis lorsque la partie arrière 26 se déplace par rapport à la partie avant 24.

Le siège conducteur 21 est ici fixé à l'intérieur de l'habitacle 27 tout en permettant un déplacement limité pour régler la position du siège 21 par exemple en fonction de la taille et de la corpulence d'un occupant de ce siège 21. Par exemple, le siège 21 peut présenter un déplacement limité en translation par rapport à l'habitacle 27 selon un degré de liberté. Par déplacement limité, on entend ici que le siège 21 est apte à se déplacer par rapport à l'habitacle 27 avec une course inférieure ou égale à 50cm ou à 25cm.

Ici, le véhicule 20 comporte en outre une caisse, qui repose à la fois sur les parties 24 et 26.

Les roues sont aptes à faire rouler le véhicule 20 sur la route 22. Ces roues sont placées sur le véhicule de manière à former des trains avant 38 et arrière 40 de roues. Ces trains 38 et 40 sont ici fixés, respectivement, sur les parties 24 et 26 du châssis. Ces roues sont par exemple équipées de pneumatiques.

Pour chacun de ces trains de roues, on définit un « axe transversal » de la manière suivante :

- si le train de roues ne comporte qu'une seule roue, l'axe transversal est l'axe parallèle à l'axe de roulement de cette roue autour de son moyeu et passant par le centre géométrique de la surface de contact entre la route 22 et cette roue, lorsque cette roue n'est pas braquée, et
- si le train de roues comporte plus d'une roue, l'axe transversal est l'axe passant par les centres géométriques des surfaces de contact entre la route 22 et ces roues, lorsque ces roues ne sont pas braquées.

Chacun de ces axes transversaux est solidaire, sans degré de liberté, de la partie de châssis sur laquelle est fixée le train de roues respectif associé à cet axe transversal.

L'axe de roulement d'une roue est défini comme étant l'axe de rotation horizontal autour duquel la roue tourne lorsqu'elle roule sur la route 22.

Le dispositif 32 est ici apte à braquer une ou plusieurs roues du véhicule. Les roues pouvant être braquées sont dites être des roues « directrices ». Les roues non directrices ne peuvent pas être braquées et sont donc en permanence dans une position non braquée.

Les roues d'un véhicule sont dites non braquées lorsqu'elles sont alignées entre elles dans une position telle qu'un véhicule automobile, identique au véhicule 20 mais dans lequel le dispositif 30 est remplacé par une liaison rigide empêchant tout mouvement des parties 24 et 26 l'une par rapport à l'autre, est apte à se déplacer en ligne droite.

Toutes les roues d'un même train sont généralement alignées le long de l'axe transversal de ce train lorsque ces roues ne sont pas braquées.

Dans cet exemple, le train 38 comporte une unique roue 42. Le train 40 comporte deux roues 44 et 46, ici identiques et disposées parallèlement l'une à l'autre. L'axe de roulement des roues 44, 46 est fixé, sans aucun degré de liberté en rotation en lacet, à la partie arrière 26 du châssis. On définit ainsi, selon la définition précédente, des axes transversaux 48 et 50, respectivement, pour les trains 38 et 40.

On définit également un plan longitudinal du véhicule 20 comme étant le plan :

- perpendiculaire à ces axes 48 et 50, lorsque ces axes 48 et 50 sont parallèles entre eux et que les roues du véhicule 20 ne sont pas braquées, et
- passant par les milieux des trains 38 et 40.

Dans la suite de cette description, on considérera la projection orthogonale de ce plan sur le plan de roulement. On parlera alors d'axe longitudinal pour désigner l'axe résultant de cette projection. Ici, le milieu du train 38 est le centre de la roue 42 et le milieu du train 40 est le point équidistant des centres de contact entre la route 22 et les roues 44 et 46.

On définit un axe longitudinal 47 de la partie 24 du véhicule 20 comme étant l'axe solidaire de la partie 24 qui est confondu avec l'axe longitudinal du véhicule lorsque les axes 48 et 50 sont parallèles et que les roues du véhicule 20 ne sont pas braquées.

De même, on définit un axe longitudinal 49 de la partie 26, comme étant l'axe solidaire de la partie 26 confondu avec l'axe longitudinal du véhicule 20 lorsque les axes 48 et 50 sont parallèles et que les roues du véhicule 20 ne sont pas braquées.

Le plan de roulement est le plan passant par les surfaces de contact entre la route 22 et les roues 42, 44 et 46. Ce plan de roulement est ici horizontal.

Le dispositif 30 permet aux parties 24 et 26 de pivoter l'une par rapport à l'autre autour d'un axe 39, dit d'articulation, normal à un plan de roulement du véhicule afin de modifier un angle d'articulation θ (figure 4) du véhicule 20. Cet angle θ est ici défini comme l'angle aigu entre les axes longitudinaux 47 et 49 des parties, respectivement, 24 et 26. Cet axe 39 est ici confondu avec l'axe instantané de rotation des parties 24 et 26 l'une par rapport à l'autre. Les axes 47 et 49 présentent ici une intersection avec l'axe 39.

La figure 5 représente plus en détail un exemple de ce dispositif 30. Dans cet exemple, ce dispositif 30 comporte :

- une articulation mécanique 31,
- un mécanisme commandable 31C de verrouillage de l'articulation 31 pour maintenir l'angle θ à sa valeur nulle ;
- une unité 33A de pilotage automatique apte à commander le mécanisme 31C,
- des butées 35 et 37, agencées sur le châssis pour limiter le plus petit rayon de braquage autorisé par le dispositif 30.

Le mécanisme 31C est apte à basculer, en alternance, entre :

- une position verrouillée, dans laquelle il maintient les parties 24 et 26 du véhicule 20 alignées l'une par rapport à l'autre , et
- une position déverrouillée, dans laquelle les parties 24 et 26 sont libres de pivoter, l'une par rapport à l'autre, en rotation autour de l'axe d'articulation 39.

Les parties 24 et 26 sont dites alignées l'une par rapport à l'autre si leurs axes longitudinaux 47 et 49 sont ici confondus.
Ce mécanisme 31C comporte ici :

- un actionneur 33, pour modifier l'angle θ en réponse à un signal de commande, fourni par l'unité 33A, et
- un capteur 33B pour mesurer l'angle θ.

Avantageusement, le dispositif 30 est apte à maintenir, uniquement grâce à sa conformation mécanique, l'axe instantané de rotation de la partie 24 par rapport à la partie 26 :

- à équidistance des axes transversaux 48, 50 des trains de roues du véhicule, lorsque ces axes transversaux sont parallèles, et
- sur la bissectrice de l'angle aigu formé par ces axes transversaux 48, 50 lorsque ces axes transversaux ne sont pas parallèles et que les roues du véhicule 20 ne sont pas braquées.

Ici, l'articulation 31 est située à équidistance des axes 48 et 50 lorsque ces axes sont parallèles. Le centre instantané de rotation de la partie 24 par rapport à la partie 26 est donc bien situé sur l'axe 39, et est ici équidistant des axes 48 et 50.
De préférence, l'articulation 31 comporte un limiteur de tangage configuré pour limiter le mouvement en tangage des parties 24 et 26 l'une par rapport à l'autre. Par tangage d'une partie du châssis, on désigne ici un mouvement de balancement d'avant en arrière de cette partie de châssis lorsque le véhicule 20 se déplace en ligne droite sur la route 22. Avantageusement, l'articulation 31 comporte en outre un limiteur de roulis pour limiter le mouvement de roulis entre les parties 24 et 26. Par roulis d'une partie de châssis, on désigne ici un mouvement de pivotement latéral autour de l'axe longitudinal de cette partie de châssis lorsque le véhicule 20 se déplace en ligne droite sur la route 22.
L'articulation 31 solidarise ici les deux parties 24 et 26 de façon non détachable.
L'actionneur 33 est ici mécaniquement raccordé directement entre les parties 24 et 26. En plus du verrouillage de l'articulation 31, l'actionneur 33 permet ici de repousser et, en alternance, d'attirer l'une vers l'autre ces parties 24, 26 en les faisant pivoter autour de l'axe 39. En réponse à une commande, l'actionneur 33 est apte à déplacer les parties 24 et 26 pour obtenir une valeur prédéterminée de l'angle θ puis à maintenir l'angle θ à cette valeur tant qu'une nouvelle commande n'est pas reçue. Par exemple, l'actionneur 33 comporte un ou plusieurs vérins tels que des vérins hydrauliques.
Les butées 35, 37 sont ici fixées sans aucun degré de liberté sur la partie 24. Elles sont disposées pour venir en butée sur des contre-butées respectives montées sans aucun degré de liberté sur la partie 26 afin de limiter le débattement angulaire de l'articulation 31. Elles maintiennent donc la valeur de l'angle θ dans une plage $[\theta_{min} ; \theta_{max}]$. La position dans laquelle les parties 24 et 26 sont alignées l'une par rapport à l'autre correspond à la valeur zéro de l'angle θ. Par exemple, la plage angulaire $[\theta_{min} ; \theta_{max}]$ est symétrique autour de la valeur zéro et comprise entre -90° et +90° ou entre -55° et 55°.
Le véhicule est donc apte à se déplacer en ligne droite lorsque les parties 24 et 26 sont alignées et que les roues ne sont pas braquées.
La figure 6 représente un exemple de l'articulation 31 du dispositif 30. Cette articulation 31 comporte :

- un arbre vertical 51, relié mécaniquement et sans aucun degré de liberté à la partie 26 par une barre 52, et
- des anneaux 56, 57 raccordés mécaniquement et sans aucun degré de liberté à la partie 24 du châssis par une barre 55.

L'arbre 51 est reçu à rotation à l'intérieur des anneaux 56, 57. Des épaulements 53, 54, aux extrémités de l'arbre 51, le retiennent à l'intérieur des anneaux 56, 57. Ici, les anneaux 56, 57 sont disposés, respectivement, entre la barre 52 et l'épaulement 53, et entre la barre 52 et l'épaulement 54. Ainsi, les parties 24 et 26 peuvent pivoter autour de l'axe 39. Le jeu réduit entre l'arbre 51 et l'espace intérieur des anneaux 56, 57 limite ici les mouvements de tangage et de roulis des parties 24, 26 l'une par rapport à l'autre.

Les figures 7 et 8 représentent plus en détail, respectivement, les attelages 34 et 36. Les attelages 34 et 36 sont situés, respectivement, à l'avant et à l'arrière du véhicule 20. Ici, ces attelages 34 et 36 sont ancrés aux parties, respectivement, 24 et 26 du châssis, sans degré de liberté en rotation en lacet.

L'attelage 34 est déplaçable, en alternance, entre des positions attelée et dételée. Dans sa position attelée (figure 7), l'attelage 34 coopère avec un attelage arrière 60 situé sur un autre véhicule 62 pour l'attacher mécaniquement au véhicule 20. Ici, le véhicule 62 est identique au véhicule 20. Sur la figure 7, l'axe transversal du train de roues arrière du véhicule 62 porte la référence 64. De plus, pour améliorer la lisibilité des figures 7 et 8, les axes transversaux des trains roulants des véhicules attachés sont représentés distants, l'un à côté de de l'autre.

Dans la position attelée, la partie avant 24 du véhicule 20 est mécaniquement raccordée, sans aucun degré de liberté en rotation en lacet, à la partie arrière du châssis du véhicule 62. Par exemple, pour cela, les attelages 34 et 60 sont équipés chacun de pièces rigides de formes complémentaires aptes à être emboîtées l'une dans l'autre par encastrement. Par exemple, l'attelage 34 présente une pièce rigide de forme convexe et l'attelage 60 présente une pièce rigide de forme concave. De préférence, ces formes concave et convexe ne sont pas arrondies, de façon à empêcher toute rotation autour d'un axe vertical de l'attelage 34 par rapport à l'attelage 60 lorsque ces attelages 34 et 60 sont attelés. Par exemple, les pièces rigides sont en matière métallique et fixées aux parties correspondantes des châssis des véhicules 20 et 62 sans degré de liberté en rotation en lacet. Ainsi, les axes longitudinaux respectifs de la partie 24 et de la partie arrière du véhicule 62 sont alignés parallèlement l'un par rapport à l'autre. En outre, les axes 48 et 64 sont maintenus à une distance constante l'un de l'autre, à 1 % ou à 3 % près, par exemple, grâce à un dispositif de maintien. Par exemple, ce dispositif de maintien comporte ici deux aimants, de polarité opposée, disposés en regard l'un de l'autre sur les parties 24 et 26.

Afin de limiter l'espace entre les véhicules 20 et 62 dans la position attelée, l'avant du véhicule 20 et l'arrière du véhicule 62 présentent des formes complémentaires l'une par rapport à l'autre pour permettre aux axes 48 et 64 d'être confondus dans la position attelée. Pour cela, le train avant 38 du véhicule 20 et le train arrière du véhicule 62 présentent des formes complémentaires.

Dans ces conditions, dans la position attelée, la roue 42 du véhicule 20 est alignée sur un même axe transversal que les roues du train arrière du véhicule 62. On dit alors que ces trains sont complètement emboîtés. Cela réduit le ripage subi par les roues des trains emboîtés lorsque les véhicules attachés entre eux suivent une trajectoire courbe, par exemple en virage. L'usure des pneumatiques de ces roues est ainsi réduite, et la tenue de route de ces véhicules est améliorée.

Dans la position dételée, ces deux véhicules 20 et 62 sont détachés l'un de l'autre, et sont libres de se déplacer indépendamment l'un de l'autre.

De façon analogue, l'attelage 36 est déplaçable, en alternance, entre des positions attelée et dételée. Dans sa position attelée (figure 8), l'attelage 36 coopère avec un attelage avant 66, situé sur un véhicule 68, pour attacher mécaniquement ces véhicules entre eux. A cet effet, les attelages 36 et 66 sont, respectivement, identiques aux attelages 60 et 34. Le véhicule 68 est, par exemple, identique au véhicule 20. Sur la figure 8, l'axe transversal du train avant de roues du véhicule 68 porte la référence 70.

La figure 9 représente plus en détail le train 40. Ce train 40 comporte :

- les roues 44, 46, et
- une traverse 80, reliée mécaniquement, sans aucun degré de liberté en rotation en lacet, à la partie 26.

La traverse 80 s'étend parallèlement à l'axe 50 du train 40. Cette traverse 80 relie mécaniquement entre elles des moyeux 82, 84 respectivement, des roues 44 et 46. La traverse 80 est sur-élevée par rapport à l'axe de roulement des roues 44 et 46, de manière à ménager un emplacement 86 pour la roue avant du véhicule 68 lorsque ces véhicules sont attachés entre eux au moyen de l'attelage 36. Par exemple, cette traverse 80 est surélevée d'une distance supérieure au rayon de la roue 42.

Cette complémentarité de formes permet de réduire l'espace séparant deux véhicules attachés entre eux, et donc de réduire l'encombrement d'un convoi routier formé de ces véhicules attachés.

La figure 10 représente un exemple du dispositif 32 pour modifier la direction de la trajectoire du véhicule 20.

Le dispositif 32 est apte à modifier l'angle de braquage φ (figure 4) de la roue 42 en réponse à une commande d'un conducteur du véhicule 20. L'angle de braquage d'une roue avant du véhicule 20 est ici défini comme étant l'angle aigu entre le plan vertical perpendiculaire à l'axe de roulement de la roue et le plan vertical contenant l'axe longitudinal 47 de la partie 24. Pour simplifier la figure 4, le dispositif 32 est représenté déporté à l'arrière de la roue 42. Lorsque la roue 42 n'est pas braquée, cet angle φ est nul.

Ce dispositif 32 est notamment apte à être actionné par un conducteur:

- indépendamment du dispositif 30, et
- uniquement lorsque l'attelage 34 du véhicule 20 est dans sa position dételée.

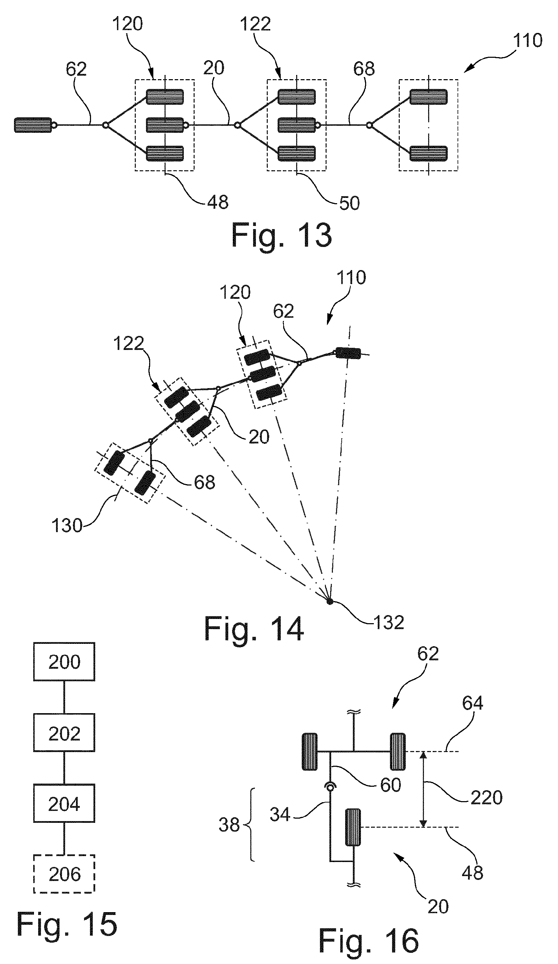

La commande de ce dispositif 32 est décrite plus en détail en référence à la figure 15.

Ici, le dispositif 32 comporte :

- une fourche 90 attachée à la roue 42,
- une colonne de direction 91, et
- le volant 23 joint, sans degré de liberté en rotation, à la colonne 91.

Cette fourche 90 comporte une barre de direction 92 qui se scinde, à son extrémité inférieure, en deux branches 93 et 95. Les branches 93 et 95 sont fixées à la barre 92. Ici, la colonne 91 est également fixée à la barre 92. Les extrémités inférieures des branches 93, 95 sont reliées mécaniquement à un moyeu 94 de la roue 42 de façon à permettre la rotation de la roue 42 autour de son axe de roulement. Le dispositif 32 comporte ici un palier 96 relié mécaniquement sans aucun degré de liberté à la partie 24 du châssis du véhicule 20. La barre 92 pivote à l'intérieur de ce palier, ici selon un axe de rotation du palier 96, de façon à permettre la rotation de la roue 42.

La figure 10 représente également un exemple de réalisation d'un dispositif 34A de maintien de l'angle de braquage de la roue 42 à sa valeur nulle lorsque l'attelage 34 est dans sa position attelée. En effet, lorsque le véhicule 20 est attaché au véhicule 62, l'axe de roulement de la roue 42 est maintenu parallèle à l'axe de roulement des roues du train arrière du véhicule 62. Dans le cas où le train avant du véhicule 20 comporte une seule roue 42, cela revient à maintenir les axes transversaux 48 et 64 parallèles entre eux tant que ces véhicules 20 et 62 sont attachés. Par exemple, les attelages 34 et 60 maintiennent les axes longitudinaux respectifs des parties 24 et arrière du véhicule 62 alignés entre eux. La roue 42 est amenée en alignement avec l'axe 47 jusqu'à ce que l'angle de braquage φ soit nul. Les axes 48 et 64 sont alors alignés parallèlement entre eux.

Dans cet exemple de réalisation, le dispositif 34A est apte à braquer automatiquement la roue 42, pour que l'angle de braquage devienne nul (et donc que l'axe transversal 48 devienne parallèle à l'axe transversal 64), puis à verrouiller la roue 42 dans cette position tant que l'attelage 34 est dans sa position attelée. Dans cet exemple, le dispositif 34A comporte à cet effet :

- un dispositif de verrouillage 97A commandable,
- un capteur 97B de la position de l'attelage 34,
- un actionneur électrique 97C commandable, apte à braquer la roue 42 jusqu'à sa position où son angle de braquage est nul, et
- une unité 97D de pilotage de l'actionneur 97C et du verrou 97A en fonction des informations délivrées par le capteur 97B.

Ici, l'actionneur 97C comporte également un capteur 97E de mesure de l'angle de braquage φ, apte à communiquer avec l'unité 97D pour fournir la valeur de cet angle φ.

Le dispositif 97A est ici un verrou électrique commandable. Ce dispositif 97A sera donc ici par la suite nommé « verrou ». Le verrou 97A est configuré pour empêcher l'actionnement du dispositif 32 par le conducteur lorsque l'attelage 34 du véhicule 20 est dans sa position attelée. A cet effet, ce verrou 97A est déplaçable entre :

- une position verrouillée dans laquelle il empêche la rotation de la colonne de direction 91, et
- une position déverrouillée dans laquelle la colonne 91 peut être déplacée par le conducteur pour braquer la roue 42.

Le capteur 97B détecte les positions attelée et dételée de l'attelage 34 et délivre cette information aux unités 33A et 97D de pilotage. Le fonctionnement du dispositif 34A est décrit plus en détail en référence à la figure 15.

Avantageusement, le dispositif 32 présente un déport de chasse D inférieur, en valeur absolue, à la plus petite distance séparant l'axe 39 de l'axe 48 lorsque les axes 48 et 50 sont parallèles. Ce déport de chasse est ici, en valeur absolue, trois fois ou dix fois inférieur à cette plus petite distance et, de préférence, vingt fois inférieur à cette distance.

Par déport de chasse, on désigne la distance algébrique entre :

- le centre géométrique de la surface de contact entre la route 22 et la roue 42, et
- la projection, dans le plan de roulement, de l'axe de rotation du dispositif 96.

Ici, ce déport de chasse D est obtenu en choisissant un angle de chasse α (« caster angle » en langue anglaise) dont la valeur absolue est inférieure à 15° ou à 10° et supérieure à 0°. La figure 11 représente plus en détail cet angle de chasse a. Ici, cet angle de chasse α est positif. Du fait de la valeur réduite du déport de chasse D, un effort mécanique moindre est requis pour braquer la roue 42 du train 38. La manoeuvrabilité du véhicule 20 est ainsi améliorée.

En actionnant le dispositif 32 indépendamment du dispositif 30, la manoeuvrabilité du véhicule 20 est accrue lorsque ce véhicule est attaché à un autre véhicule pour former un convoi routier. En particulier, le risque de mettre en accordéon un tel convoi routier lors d'un braquage sur place est réduit.

Avantageusement, lorsque le véhicule 20 est en tête d'un convoi routier comportant d'autres véhicules attachés entre eux, c'est-à-dire qu'il est situé à l'avant d'un de ces autres véhicules tout en n'étant pas lui-même attaché à l'arrière d'un autre véhicule, alors le rayon de braquage minimal du dispositif 32 (le dispositif d'articulation 30 de ce véhicule étant bloqué) est supérieur au rayon de braquage minimal autorisé par les dispositifs d'articulation respectifs des véhicules suiveurs (lorsque leurs dispositifs de direction 32 respectifs sont non braqués). Cette limitation est, par exemple, réalisée grâce aux butées 35 et 37 et à des butées disposées sur le dispositif 32. La limitation du rayon de braquage du dispositif 30 des véhicules suiveurs à une valeur inférieure à celle du rayon de braquage du dispositif 32 réduit le risque de blocage du dispositif 30 des véhicules suiveurs, même si ces véhicules suiveurs présentent des longueurs différentes.

Les figures 12 et 13 représentent un convoi routier 110 sur la route 22. Dans cet exemple, ce convoi 110 est formé des véhicules 20, 62 et 68 attachés entre eux deux à deux au moyen des attelages 34, 36, 60 et 66. Pour simplifier, le détail des véhicules du convoi 110 n'est pas illustré sur les figures 12 et 13. Ces véhicules 20, 62 et 68 sont ici alignés de façon rectiligne, de sorte que les axes longitudinaux respectifs de ces véhicules sont confondus. Les axes transversaux des trains avant et arrière de chacun des véhicules sont parallèles deux à deux. Le train arrière du véhicule 62 est ici complètement emboîté avec le train 38 du véhicule 20 (fig. 13). De même, le train avant du véhicule 68 est complètement emboîté avec le train 40 du véhicule 20. Ces trains emboîtés entre eux se comportent ainsi respectivement comme d'uniques trains de roues 120, 122 (figure 13). Le véhicule 62 est en tête du convoi 110, avec son attelage avant en position dételée. Par la suite, le véhicule 60 est qualifié de « véhicule de tête » du convoi. Les véhicules 20 et 68 sont qualifiés de « véhicules suiveurs ». Le dispositif 32 de ce véhicule 62 est commandable par le conducteur du véhicule 62, de façon à diriger le convoi 110. Le dispositif 30 du véhicule 62 est ici verrouillé par l'actionneur 33 et l'angle θ est maintenu à une valeur nulle, de sorte que les parties 24 et 26 du châssis soient alignées longitudinalement. Le dispositif 32 des véhicules suiveurs 20 et 68 n'est pas actionnable par les conducteurs respectifs de ces véhicules 20 et 68.

La figure 14 représente le convoi 110 selon une trajectoire courbe, par exemple lors d'une inscription du convoi 110 dans un virage.

Les centres géométriques des trains de roues respectifs de chaque véhicule suiveur du convoi 110 (dont, ici, les trains 120 et 122 et aussi le train de roues arrière du véhicule 68) suivent une même trajectoire 130. La trajectoire 130 est ici un arc de cercle de centre 132. Le centre 132 est le point vers lequel convergent ces axes transversaux respectifs des trains de roues des véhicules suiveurs du convoi 110. Les véhicules suiveurs 20 et 68 présentent un suivi monotrace par rapport au train 120 du véhicule 62 de tête, c'est à dire que les centres des trains de roues respectifs de chaque véhicule suiveur sont tous à une même distance du centre 132. Ce suivi monotrace est ici assuré par la conformation mécanique du dispositif 30, qui permet de maintenir la position de l'axe instantané de rotation de la partie 24 par rapport à la partie 26 :

- à équidistance des axes transversaux 48, 50 des trains de roues du véhicule, lorsque ces axes transversaux sont parallèles, et
- sur la bissectrice de l'angle aigu formé par ces axes transversaux 48, 50 lorsque ces axes transversaux ne sont pas parallèles et que les roues du véhicule 20 ne sont pas braquées.

De façon analogue à ce qui a été décrit en référence aux véhicules 62 et 20, les attelages 36 et 66 maintiennent les axes longitudinaux respectifs des parties 26 et avant du véhicule 68 alignés entre eux. La roue du train avant du véhicule 68 est maintenue alignée avec le train 40 du fait que son dispositif de direction est maintenu bloqué lorsque cette roue n'est pas braquée.

Un exemple d'un procédé de commande du véhicule 62 va maintenant être décrit, en référence à l'organigramme de la figure 15.

Initialement, on suppose que le véhicule 68 est détaché du véhicule 20. Lors d'une étape 200, le conducteur du véhicule 20 détache son véhicule du véhicule 62. Par exemple, pour cela, quand le véhicule 62 est à l'arrêt, le conducteur passe la marche arrière. En réponse, l'attelage 34 est automatiquement déplacé vers sa position dételée. Le capteur 97B du dispositif 34A détecte immédiatement ce passage dans la position dételée et transmet cette information aux unités 33A et 97D de pilotage. En réponse, l'unité 33A commande l'actionneur 33 pour ramener l'angle θ à la valeur zéro puis verrouille l'articulation 31 pour empêcher que les parties 24 et 26 pivotent l'une par rapport à l'autre autour de l'axe 39 tant que l'attelage 34 est dans sa position dételée. Uniquement ensuite, l'unité 97D commande le verrou 97A pour le faire passer de sa position verrouillée vers sa position déverrouillée. Le véhicule 20 peut dès lors être piloté par le conducteur à l'aide du volant 23. A l'issue de l'étape 200, chacun des véhicules 20, 62 et 68 est piloté et dirigé indépendamment, à l'aide de leur dispositif 32 respectif, par des conducteurs respectifs.

Lors d'une étape 202, le véhicule 20 est attaché à l'arrière du véhicule 62. Pour cela, alors que le véhicule 62 est à l'arrêt, le véhicule 20 est approché de l'arrière du véhicule 62 pour emboîter les attelages 34 et 60 l'un avec l'autre. Cela provoque automatiquement le passage des attelages 34 et 60 dans leur position attelée. Le capteur 97B du dispositif 34A du véhicule 20 détecte alors la position attelée et transmet immédiatement cette information aux unités 33A et 97D de pilotage. En réponse, l'unité 33A commande l'actionneur 33 pour libérer en rotation l'articulation 31. Dès lors, les parties 24 et 26 du véhicule 20 peuvent librement pivoter l'une par rapport à l'autre autour de l'axe 39. Dans le même temps, l'attelage avant du véhicule 62 reste dans sa position dételée. Ensuite, l'unité 97D commande l'actionneur 97C pour braquer automatiquement la roue 42 du train avant 38 dans une position où son angle de braquage est nul. Ensuite, l'unité 97D commande le déplacement du verrou 97A vers sa position verrouillée pour bloquer en rotation la colonne 91 de direction tant que l'attelage 34 est dans sa position attelée. Ainsi, le dispositif 32 de ce véhicule 20 ne peut plus être actionné par un conducteur du véhicule. Notamment, l'articulation du véhicule 62 est maintenue bloquée dans une position où son angle d'articulation est nul, tandis que son dispositif de direction est libre pour permettre le pilotage de ce véhicule 62. Le conducteur du véhicule 62 dirige le convoi ainsi formé à l'aide du volant 23 de ce véhicule.

Lors d'une étape 204, le véhicule 68 est attaché à l'arrière du véhicule 20 pour former le convoi 110. L'étape 204 est identique à l'étape 202 sauf qu'elle se déroule entre les véhicules 20 et 68. De plus, contrairement au véhicule 62 en tête du convoi 110, l'articulation 31 est maintenue libre, tandis que le dispositif 32 est maintenu dans un état non commandable par le conducteur du véhicule 20.

Ensuite, les véhicules du convoi 110 peuvent être détachés les uns des autres comme décrit lors de l'étape 200.

De nombreux autres modes de réalisation sont possibles. Par exemple, les roues du véhicule peuvent être réparties différemment. Ainsi, en variante, le train avant comporte au moins deux roues et le train arrière comporte une seule roue. Dans une autre variante, le véhicule 20 comporte plus de trois roues. Dans cette autre variante, chaque train comporte au moins deux roues. Le véhicule 20 peut aussi comporter des roulettes pivotantes libres de chasse positive (« jockey wheel », « caster wheel » ou « swivel wheel » en langue anglaise), fixées sur le châssis, mais n'appartenant pas aux trains avant et arrière. Ces roulettes ne sont notamment pas commandables par les dispositifs 30 et 32. La direction de ces roulettes s'aligne automatiquement sur celles de la trajectoire du véhicule car elles présentent un déport de chasse positif.

Le véhicule 20 peut présenter une forme différente de celle décrite. Par exemple, le véhicule 20 est un quadricycle comportant un seul siège de front. Le siège passager 25 peut être omis ou placé derrière le siège 21.

Le siège conducteur 21 peut aussi être fixé à l'habitacle 27 sans aucun degré de liberté. Il en va de même pour le siège passager 25. Ces sièges peuvent aussi être réglés suivant deux degrés de liberté.

Les véhicules formant le convoi 110 peuvent être différents les uns des autres. Par exemple, les véhicules peuvent présenter des longueurs différentes. Les trains avant et/ou arrière de deux de ces véhicules peuvent présenter des écartements différents. Ces véhicules peuvent comporter des nombres de roues distincts. Par exemple, certains véhicules comportent trois roues, d'autres quatre. Cependant, les attelages respectifs avant et arrière de ces véhicules sont identiques (ou, au moins, compatibles entre eux), pour faciliter l'attachement de ces véhicules deux à deux. Il est aussi possible d'attacher une remorque à un véhicule. Par exemple, cette remorque est identique au véhicule sauf qu'elle ne comporte pas de dispositif 32 de direction et que l'axe transversal du train avant est bloqué en permanence dans une position où il est parallèle à l'axe transversal du train arrière du véhicule auquel elle est attachée. De préférence, la remorque est dépourvue de siège pour laisser plus de place pour transporter des bagages.

La forme et/ou les dimensions de l'emplacement 86 sont adaptées dans le cas où deux véhicules attachés comportent des roues de diamètres différents.

Les trains de roues des véhicules peuvent ne pas être complètement emboîtés dans la position attelée. Dans ce cas, de préférence, des parties avant et arrière des véhicules attachés sont conformées pour que, dans la position attelée, les axes transversaux des trains arrière et avant, respectivement, des véhicules attachés soient séparés l'un de l'autre par une distance inférieure à la somme du rayon de la roue 42 (ou du rayon de la roue avant du véhicule suiveur lorsque les roues présentent des diamètres différents) et du rayon de la roue 44 ou 46. Dans une autre variante, cette distance peut être supérieure à la somme de ces rayons, comme illustré à la figure 16. Par exemple, le véhicule 20 est attaché à l'arrière du véhicule 62. L'axe transversal 64 du train arrière de roues du véhicule 62 est séparé de l'axe 48 par une distance (illustrée par la flèche 220) supérieure à la somme de ces rayons. Dans ce cas, les trains roulants sont dits être « en tandem ». De tels trains roulants en tandem sont, par exemple, ceux décrits dans le document US-3294418-A (T.A. MIDDLESWORTH ET AL) en référence aux figures 3 et 4 de ce document.

Dans le cas où ces trains ne sont pas complètement emboîtés dans la position attelée, le dispositif 32 peut en outre comporter un dispositif automatique de pilotage, configuré pour modifier l'angle de braquage des roues du train 24 en réponse à un signal de commande, uniquement lorsque ce véhicule est attaché à l'arrière d'un autre véhicule.

L'articulation 31 peut être réalisée différemment. Par exemple, l'articulation 31 est remplacée par une rotule.

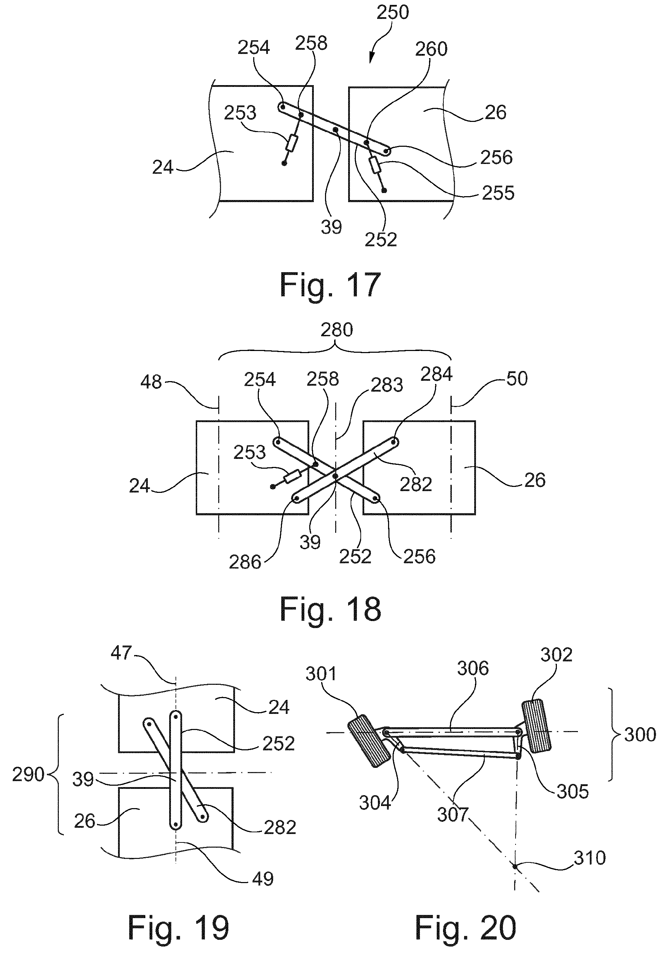

La figure 17 représente un dispositif 250 apte à être utilisé en lieu et place du dispositif 30. Ce dispositif 250 comporte une poutre 252 et des actionneurs 253, 255 qui remplacent l'actionneur 33. Cette poutre 252 s'étend, parallèlement au plan de roulement du véhicule 20, entre deux extrémités respectivement ancrées aux parties 24 et 26 par des points d'ancrage 254 et 256. L'actionneur 253 s'étend entre la partie 24 et un point d'ancrage 258 sur la poutre 252. De même, l'actionneur 255 s'étend entre la partie 26 et un point d'ancrage 260 sur la poutre 252. Chaque point d'ancrage 254, 256, 258 et 260 comporte une liaison pivot, dont l'axe de rotation est perpendiculaire au plan de roulement. L'unité 33A est modifiée pour commander les actionneurs 253 et 255 de manière à modifier l'angle θ de la même façon que ce qui a été décrit dans le cas du dispositif 30. Le procédé de commande du véhicule comportant ce dispositif 250 comporte ici les étapes 200 à 204 et, avantageusement, une étape 206. Lors de cette étape 206, postérieure à l'étape 204 et consécutive au déplacement du véhicule, les actionneurs 253, 255 sont commandés de façon à maintenir l'axe instantané de rotation des parties 24 et 26 l'une par rapport à l'autre :

- à équidistance des axes transversaux 48, 50 des trains de roues du véhicule, lorsque ces axes transversaux sont parallèles, et
- sur la bissectrice de l'angle aigu formé par ces axes transversaux 48, 50 lorsque ces axes transversaux ne sont pas parallèles et que les roues du véhicule 20 ne sont pas braquées.

En variante, cette poutre 252 est alignée parallèlement aux axes 47 et 49 des parties, respectivement, 24 et 26 du véhicule 20 lorsque ces parties sont alignées. Un point milieu des points d'ancrage 254 et 256 est placé de façon équidistante des axes transversaux 48 et 50. On définit un plan vertical passant par ce point milieu et étant équidistant des points 254 et 256. Les actionneurs 253, 255, leurs points d'ancrage respectifs ainsi que les points 258 et 260 sont symétriques deux à deux par rapport à ce plan vertical. Ces actionneurs 253 et 255 sont gouvernés par une même loi de commande et présentent une même course.- Alors l'axe 39 est l'axe vertical passant par le point milieu. Ainsi, le véhicule 20 est apte à présenter une trajectoire monotrace lorsqu'il est compris dans un convoi routier en tant que véhicule suiveur.

La figure 18 représente un dispositif 280 de direction apte à être utilisé en lieu et place des dispositifs 30 ou 250. Ce dispositif est identique au dispositif 250, sauf que :

- l'actionneur 255 est omis, et
- une seconde poutre 282 est ajoutée.
- les poutres 252 et 258 ne sont pas alignées par rapport à l'axe longitudinal du véhicule 20.

En vue de dessus, la poutre 282 croise la poutre 252 au niveau de l'axe instantané de rotation 39 de la partie 24 par rapport à la partie 26. Ces deux poutres 252 et 282 présentent désormais une symétrie de réflexion par rapport à un plan vertical 283, passant par l'axe 39 et perpendiculaire à l'axe longitudinal du véhicule 20, lorsque les deux parties de châssis sont alignées. Les deux poutres ne sont cependant pas reliées mécaniquement au niveau de cet axe 39. Par exemple, la poutre 282 est identique à la poutre 252 sauf que ses extrémités sont respectivement reliées mécaniquement aux parties 24 et 26 du châssis du véhicule 20 par des points d'ancrage 284 et 286. Les points d'ancrage 284, 286 sont identiques aux points 254 et 256 sauf qu'ils sont positionnés de manière à ce que la poutre 282 croise la poutre 252 comme décrit ci-dessus. L'axe 39 est préférentiellement situé à équidistance des axes 48 et 50 du véhicule. Ainsi, le véhicule 20 est apte à présenter une trajectoire monotrace lorsqu'il est compris dans un convoi routier en tant que véhicule suiveur.

L'actionneur 253 peut également être omis.

La figure 19 représente un dispositif d'articulation 290 apte à remplacer l'un des dispositifs 30, 250 ou 280. Ce dispositif 290 est identique au dispositif 280, à la différence que :

- les poutres 252 et 282 sont disposées de façon à ce que la poutre 252 soit parallèle aux axes 47 et 49 lorsque les parties 24 et 26 sont alignées ;
- l'actionneur 253 est omis.

L'axe 39 est l'axe vertical situé au point de croisement des deux poutres. Cependant, même si cet axe 39 est disposé de façon équidistante des axes 48 et 50 lorsque les parties 24 et 26 sont alignées longitudinalement, la conformation de ce dispositif 290 ne permet pas de maintenir l'axe instantané de rotation sur la médiatrice des deux axes transversaux aux trains roulants adjacents des lors que les angles d'articulation ne sont plus nuls. Ce dispositif engendre donc une dérive du caractère monotrace du véhicule 20 qui n'est plus apte à présenter une trajectoire monotrace lorsqu'il est compris dans un convoi routier en tant que véhicule suiveur

L'articulation 31 peut être placée n'importe où entre des plans verticaux passant, respectivement, par les axes transversaux 48 et 50. En particulier, il est possible de disposer l'articulation 31 dans l'un des plans passant par les axes 48 et 50. Dans ce cas, l'axe instantané de rotation n'est plus équidistant des deux axes transversaux. Le convoi 110 n'est alors pas monotrace.

Le dispositif 32 peut être différent, notamment lorsque le train 38 comporte plus d'une roue. Par exemple, la figure 20 représente un dispositif de direction 300 apte à remplacer le dispositif 32 lorsque le train 38 comporte deux roues 301, 302. Ce dispositif 300 comporte une direction automobile selon la géométrie dite d'Ackermann (« Ackermann steering » en langue anglaise). A cet effet, ce dispositif 300 comporte :

- des porte-fusées 304, 305, respectivement reliées aux roues 301 et 302 et présentant chacune un levier de direction,
- une poutre 306, fixée sans aucun degré de liberté en rotation en lacet à la partie 24 du châssis et reliée mécaniquement aux leviers de direction des porte-fusées 304 et 305 par des liaisons pivot de manière à ce que ces porte-fusées 304 et 305 puissent pivoter autour des axes de pivot respectifs des roues, et
- une barre 307, reliée mécaniquement aux leviers de direction.

On définit l'axe de pivot d'une roue comme étant l'axe autour duquel pivote la roue lorsqu'elle est braquée, cet axe de pivot étant solidaire sans degré de liberté de la partie de châssis auquel le train de roues dont fait partie la roue est attaché. Cet axe de pivot est typiquement vertical, à 2° ou 3° ou 5° ou 10° près.

Cette direction 300 est configurée pour ce que le point de focalisation 310 des leviers de direction soit placé entre des plans verticaux parallèles passant respectivement par les axes 70 (du véhicule suiveur) et 39 et, de préférence, entre les axes 50 et 39. Cette direction 300 comporte, par exemple, une direction automobile à crémaillère (non représentée sur la figure 18).

Dans une autre variante, le dispositif 32 comporte une direction dite de « type diligence », dans laquelle les trains de roues sont reliées aux châssis par un essieu apte à pivoter autour d'une cheville ouvrière verticale (« kingpin » en langue anglaise).

Dans le cas où le train avant comporte plus d'une roue, l'angle de braquage $\varphi$ est défini, pour l'ensemble des roues de ce train avant, comme étant l'angle aigu formé entre un plan vertical comportant l'axe longitudinal 47 de la partie 24 et un plan de braquage. Ce plan de braquage est défini comme étant :

- le plan équidistant au plans respectifs des roues lorsque ces roues sont parallèles, et
- le plan vertical formant un plan bissecteur entre les plans des roues de ce train lorsque ces roues ne sont pas parallèles (ce qui est par exemple le cas des roues dans le dispositif 300 lorsque ces roues sont braquées), ces plans de roue présentant donc une intersection entre eux.

Le plan d'une roue est le plan vertical perpendiculaire à la projection orthogonale de l'axe de roulement d'une roue sur le plan de roulement et passant par le centre géométrique de la surface de contact entre cette roue et le plan de roulement. Dans ces exemples, les roues du train avant présentent des angles de carrossage et de pincement nuls. Les roues s'étendent donc perpendiculairement au plan de roulement. L'homme du métier sait bien qu'en variante, ces angles de carrossage et/ou de pincement peuvent être non nuls. Dans le cas où l'angle de pincement n'est pas nul, les plans de roues sont définis comme étant les plans selon lesquels les roues seraient alignées si l'angle de pincement était nul.

Le dispositif 32 peut aussi être remplacé par un dispositif électronique de direction comportant un actionneur électrique apte à braquer chaque roue avant. Par exemple, cet actionneur électrique est commandé par le conducteur au travers d'une interface homme-machine. L'interface homme-machine peut comporter le volant 23 associé à un capteur de la position angulaire de ce volant. Dans ce cas, la colonne de direction est omise et remplacée par une unité de commande qui commande l'actionneur électrique en fonction de l'angle mesuré par le capteur.

En variante, l'une ou l'autre des branches 93 ou 95 est omise.

Dans la position dételée, il est aussi possible de prévoir que les dispositifs 30 et 32 soient, par exemple simultanément, utilisés. Ainsi, quand le conducteur tourne le volant 23 cela provoque une rotation de la colonne 91 de direction et, en même temps, une commande de l'actionneur 33 pour modifier l'angle $\theta$ d'articulation. L'utilisation conjointe des dispositifs 30 et 32 lorsque le véhicule 20 est détaché de tout autre véhicule permet d'augmenter son angle maximal de braquage.

L'angle de chasse $\alpha$ du dispositif 32 peut être nul ou négatif. Le dispositif 32 peut également présenter un déport de chasse additionnel causé par un désalignement de l'axe de rotation du dispositif 96 par rapport au centre de cette roue 42.

Le mécanisme 31C peut être omis. Dans ce cas, l'unité 33A est également omise. Le dispositif 30 peut alors être laissé libre pour le véhicule en tête du convoi 110. Les étapes 200 à 204 du procédé sont alors modifiées.

Le mécanisme 31C peut ne pas comporter l'actionneur 33. Cet actionneur 33 peut par exemple être remplacé par une paire de mâchoires, solidaires de la partie 24 et aptes à enserrer l'arbre 51 pour empêcher la rotation des parties 24 et 26 l'une par rapport à l'autre lorsque le mécanisme 31C est dans la position verrouillée.

Le dispositif 34A de maintien peut être réalisé différemment. Par exemple, dans un cas simplifié, l'angle de chasse α de la roue 42 est positif et la fourche 90 est maintenue libre en rotation dans le palier 96. Dans ces conditions, l'angle de braquage s'annule automatiquement dès lors que le convoi se déplace à cause de la valeur de l'angle de chasse α choisie. Dans ce mode de réalisation, le verrou 97A est remplacé par un mécanisme qui désolidarise la colonne 91 de direction de la fourche 90. Ainsi, le conducteur peut toujours tourner le volant 23 dans la position attelée mais cela n'a aucun effet sur la direction de la roue 42. Un tel mécanisme de désolidarisation peut aussi être utilisé en complément du verrou 97A dans les modes de réalisation décrit ici.

Le dispositif 34A peut aussi être un dispositif purement mécanique. Par exemple, en variante, le dispositif de maintien comporte des guides solidaires du train arrière ou du châssis du véhicule 62. Ces guides sont aptes à redresser la roue 42 lorsque l'attelage 34 s'enfonce à l'intérieur de l'attelage 60. Par exemple, ces guides reçoivent à coulissement des extrémités de la fusée 94 pour redresser la roue 42 lorsque l'attelage 34 s'enfonce à l'intérieur de l'attelage 60. Avantageusement, les mêmes guides empêchent le braquage de la roue 42 tant que les attelages 34 et 60 sont dans la position attelée pour remplir la même fonction que le verrou 97A. On remarquera que dans cette variante, le dispositif de maintien de l'angle de braquage de la roue 42 du véhicule 20 à sa valeur nulle est en partie ou en totalité logé sur le véhicule 62 et non pas sur le véhicule 20.

Les différentes variantes du dispositif 34A décrites ici peuvent aisément être transposées au cas d'un train avant comportant plusieurs roues.

Les attelages 34 et/ou 60 peuvent être réalisés différemment. Par exemple, en variante, l'attelage 34 comporte des crochets et l'attelage 60 comportent des barres ou des anneaux sur lesquels les crochets viennent se prendre dans la position attelée pour attacher les deux véhicules. Par exemple, les attelages 34, 60 forment un attelage trois points tel que celui utilisé pour atteler une remorque à un tracteur.

Les attelages 34 et 60 ne sont pas nécessairement fixés directement sur les parties 24 et 26 de châssis. Par exemple, l'un ou l'autre des attelages 34 et 60 est directement fixé sur le train de roues. Les deux attelages 34, 60 peuvent aussi être fixés directement sur les trains de roues.

En variante, les attelages 34 et 60 sont configurés pour que, dans l'état attelé, la roue 42 soit alignée avec l'axe 47 par encastrement dans le train arrière de roues du véhicule 62.

Les roues 42, 44 et 46 ne comportent pas forcément de pneumatiques.

En variante, les centres des trains roulant d'un même véhicule peuvent ne pas être alignés longitudinalement.

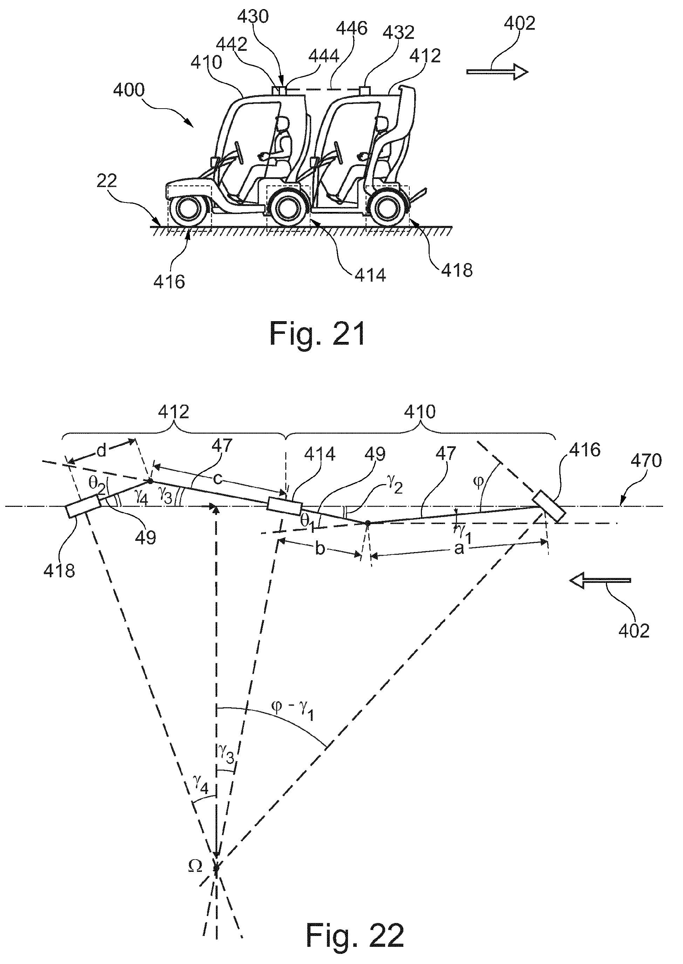

La figure 21 représente un convoi automobile routier 400 pour lequel un braquage en marche arrière est facilité. Par marche arrière, on désigne un déplacement du convoi essentiellement selon une direction de sens opposé au sens de déplacement du même convoi en marche avant. La direction de déplacement en marche arrière est ici représentée par une flèche 402.

Le convoi 400 est formé de deux véhicules automobiles routiers attelables 410 et 412 attachés entre eux. Dans cette description, par convention, on se place par rapport à la direction de déplacement du convoi en marche avant pour définir lequel des véhicules du convoi 400 est en tête du convoi. Il en va de même pour qualifier l'« avant » ou l'« arrière » du convoi 400 ou d'éléments constitutifs de ce convoi 400. Le véhicule 410 est ici placé en tête du convoi 400. Le véhicule 412 est ici placé à l'arrière, ou en queue, du convoi 400.

Le véhicule 410 est identique au véhicule 20, sauf que le véhicule 410 comporte en outre une unité de commande 430, qui sera décrite plus en détails dans ce qui suit.

Les véhicules 410 et 412 sont ici identiques.

Pour simplifier, seul le véhicule 410 sera décrit en détail. L'exemplaire de l'unité 430 appartenant au véhicule 412 porte ici la référence 432.

Les véhicules 410 et 412 sont ici attachés entre eux au moyen de leurs attelages, respectivement, arrière et avant. Les trains de roues, respectivement, arrière et avant des véhicules 410 et 412 sont ici emboîtés l'un dans l'autre et forment un train de roues équivalent 414, dit « train milieu ». Dans cet exemple, lesdits trains de roues arrière et avant des véhicules 410 et 412 sont donc confondus en un unique train de roues et on fera indifféremment référence à l'un ou à l'autre sous la référence 414 lorsque les véhicules 410 et 412 sont attachés pour former le convoi. Ici, le train avant de roues du véhicule 410 porte la référence 416 et le train arrière de roues du véhicule 412 porte la référence 418.

Avantageusement, le train 416 présente un déport de chasse inférieur, en valeur absolue, à dix ou à vingt fois la longueur de la partie 24 du véhicule 410 (notée ci-après longueur a). Cela permet de limiter le risque que la partie 24 du véhicule 410 présente une rotation en lacet importante autour de l'axe 39 du véhicule 410 lorsque les roues du train 416 sont braquées alors que le convoi 400 est immobile ou se déplace à vitesse réduite. Ce qu'est la longueur de la partie 24 sera défini dans ce qui suit.

Le convoi 400 est dit être dans une position alignée lorsque les parties 24 et 26 respectives des véhicules 410 et 412 sont toutes alignées entre elles et lorsque les roues du train avant ne sont pas braquées. Plus précisément, le convoi est dit être dans la position alignée si les angles $\theta_1$ et $\theta_2$ et $\varphi$ sont tous inférieurs à 10° ou à 5° ou à 2°. On notera

ici respectivement $\theta_1$ et $\theta_2$ les angles d'articulation des dispositifs d'articulation 30 des véhicules 410 et 412.

L'unité 430 est programmée pour, lorsque le convoi effectue une marche arrière depuis la position alignée et que le véhicule auquel elle appartient est en tête du convoi 400, asservir les angles $\theta_1$ et $\theta_2$ des véhicules 410 et 412 à des valeurs de consigne $c\theta_1$ et $c\theta_2$ respectivement calculées, à chaque instant, en fonction de l'angle $\varphi$ de braquage du train avant de roues du véhicule 410. La définition des valeurs de consigne $c\theta_1$ et $c\theta_2$ sera décrite plus en détails dans ce qui suit.

Comme indiqué précédemment, chaque dispositif d'articulation 30 comporte un actionneur 33 ici apte à déplacer les parties 24 et 26 pour obtenir une valeur prédéterminée (ou valeur de consigne) de leur angle d'articulation $\theta_1$ ou $\theta_2$ respectif, puis de maintenir cet angle à cette valeur de consigne tant qu'une nouvelle commande n'est pas reçue. Par exemple, ce déplacement et ce maintien sont réalisés par asservissement de l'angle d'articulation à la valeur de consigne obtenue. A cet effet, l'unité 33A est programmée pour commander l'actionneur 33 en fonction de la valeur de consigne et de l'angle mesuré par le capteur 33B de sorte que le dispositif 30 présente un angle d'articulation $\theta_1$ ou $\theta_2$ égal à cette valeur de consigne. L'unité 33A comporte ici à cet effet un régulateur de type PID.

L'unité 430 est donc programmée pour :

- mesurer l'angle $\varphi$ de braquage du train avant de roues du véhicule 410, ici au moyen du capteur 97E du dispositif 34A ;
- calculer, en fonction de l'angle $\varphi$ mesuré, des valeurs de consignes, notées respectivement $c\theta_1$ et $c\theta_2$, pour, respectivement, les angles $\theta_1$ et $\theta 1_2$ ;
- délivrer aux dispositifs d'articulation 30 respectifs des véhicules 410 et 412 les valeurs de consigne calculées.

A cet effet, l'unité 430 comporte :

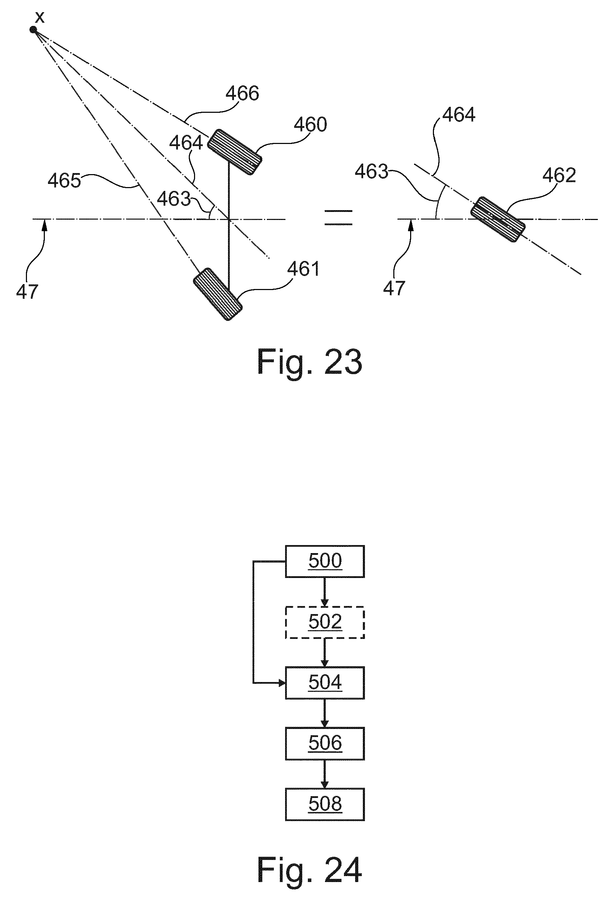

- un dispositif de calcul 442 programmé pour exécuter le procédé de la figure 24 ;
- une interface 444 d'échange de données, apte à :

  • collecter un signal de données fourni par le capteur 97E ;
  • délivrer un signal de données à destination des dispositifs 30 des véhicules 410 et 412 formant le convoi 400.

L'interface 444 est raccordée au dispositif 30 et au capteur 97E du véhicule 410, par exemple, par des liaisons filaires. L'interface 444 est également raccordée à l'unité 432 par, par exemple, une liaison sans fil 446.

Le dispositif 442 comporte ici un calculateur électronique, tel qu'un microprocesseur.

Les valeurs de consigne $c\theta_1$ et $c\theta_2$ sont choisies de façon à ce que, lors d'un déplacement du convoi 400 en marche arrière, par exemple depuis la position alignée du convoi représentée sur la figure 21, les axes transversaux des trains de roues 414, 416 et 418 se coupent en permanence en un même centre $\Omega$ instantané de rotation du convoi 400.

La figure 22 représente plus en détail les paramètres dimensionnels utilisés pour définir les valeurs de consigne $c\theta_1$ et $c\theta_2$. Plus précisément, la figure 22 représente schématiquement les véhicules 410 et 412. Pour simplifier, les trains de roues sont représentés graphiquement sur la figure 22 par une unique roue. La convention de représentation graphique des trains de roues et de définition de l'angle de braquage des roues du train avant est schématisée sur la figure 23. Ici, on considère que deux roues 460 et 461 d'un train avant sont équivalentes à une unique roue 462. L'angle de braquage 463 de cette roue 462 est alors défini comme l'angle formé entre l'axe longitudinal 47 et la droite 464 reliant le centre géométrique du train avant au point de focalisation X. Ce qu'est un point de focalisation est défini en référence à la figure 20.

On définit les paramètres dimensionnels suivants pour le convoi 400 (figure 22) :

- $\gamma 1$ est l'angle entre l'axe 47 de la partie 24 du véhicule 410 et l'axe initial 470 suivant lequel le convoi est aligné lorsqu'il est dans la position d'alignement ;
- $\gamma 2$ est l'angle entre l'axe 49 de la partie 26 du véhicule 410 et l'axe initial 470 ;
- $\gamma 3$ est l'angle entre l'axe 47 de la partie 24 du véhicule 412 et l'axe initial 470 ;
- $\gamma 4$ est l'angle entre l'axe 49 de la partie 26 du véhicule 412 et l'axe initial 470 ;
- $\Omega$ est le centre instantané de rotation défini par les essieux des trains 414 et 418 du convoi 400, ce centre instantané étant donné par le point d'intersection des axes transversaux respectifs des trains 414 et 418 ;
- a et c sont respectivement les longueurs des parties 24 des véhicules 410 et 412, mesurées chacune le long de l'axe longitudinal 47 de cette partie 24, entre l'axe 39 de l'articulation 30 et le centre du train avant de ce véhicule ;
- b et d sont respectivement les longueurs des parties 26 des véhicules 410 et 412, mesurées chacune le long de l'axe longitudinal 49 de cette partie 26, entre l'axe 39 de l'articulation 30 et le centre du train arrière de ce véhicule.

Les distances sont ici toutes mesurées dans un plan parallèle au plan de roulement du convoi.

Dans cet exemple, les véhicules 410 et 412 sont identiques et donc les longueurs a et b sont égales, respectivement aux longueurs c et d. Cependant, les notations et les formules qui seront décrites dans ce qui suit sont valables dans le cas général où les véhicules 410 et 412 ne sont pas identiques et que les valeurs de a, b, c, d sont différentes.

De façon générale, les valeurs de consigne sont choisies pour que la trajectoire suivie par le centre géométrique du train 416 soit tangente au cercle de giration centré sur le centre instantané de rotation Ω. Ceci facilite notamment l'absence de ripage du train avant lors d'un braquage sur place. La position du centre Ω est définie par l'intersection des axes transversaux des trains 414 et 418. Par la suite, on nommera condition d'optimalité cette condition.

On définit ici un système de coordonnées cartésiennes en prenant pour origine la position initiale du centre géométrique du train 418 avant le déplacement en marche arrière du convoi 400 et en prenant :

- pour axe d'abscisses l'axe 470, et
- pour axe d'ordonnées un axe perpendiculaire à l'axe 470 et parallèle au plan de la route.

Avec ces conventions, le centre Ω est défini par les relations suivantes : ΩAR.TAP = 0 et ΩMI.TMI = 0, où :

- le point AR est le centre géométrique du train 418 ;
- TAR est le vecteur tangent à la trajectoire du centre géométrique du train 418 et ayant pour origine le point AR , lors d'une manoeuvre de braquage sur place ;
- le point MI est le centre géométrique du train 414 ;
- TMI est le vecteur tangent à la trajectoire du centre géométrique du train 414 et ayant pour origine le point MI, lors d'une manoeuvre de braquage sur place ;
- ΩAR et ΩMI sont les vecteurs reliant le centre Ω au point, respectivement, AR et MI.

Lors d'un déplacement du convoi 400, le point AR a dans ce repère les coordonnées $x_{AR}$ et $y_{AR}$ définies comme suit :

$$x_{AR} = d \times \left( 1 - \cos\left( \gamma_4 \right) \right)$$

$$y_{AR} = \frac{d}{2} \times \ln\left( \frac{1 + \sin\left( \gamma_4 \right)}{1 - \sin\left( \gamma_4 \right)} \right) - d \times \sin\left( \gamma_4 \right)$$

avec :

$$\gamma_4 = \operatorname{asin}\left( \frac{\left( \frac{1 + \sin\left( \gamma_3 \right)}{1 - \sin\left( \gamma_3 \right)} \right)^{\frac{c}{d}} - 1}{\left( \frac{1 + \sin\left( \gamma_3 \right)}{1 - \sin\left( \gamma_3 \right)} \right)^{\frac{c}{d}} + 1} \right)$$

De même, lors d'un déplacement du convoi 400, le point MI a dans ce repère les coordonnées $x_{MI}$ et $y_{MI}$ définies comme suit :

$$x_{MI} = d + c \times \cos\left( \gamma_3 \right)$$

$$y_{MI} = \frac{c}{2} \times \ln\left( \frac{1 + \sin\left( \gamma_3 \right)}{1 - \sin\left( \gamma_3 \right)} \right) - c \times \sin\left( \gamma_3 \right)$$

Les vecteurs TAR et TMI ont pour valeur :

$$\overrightarrow{TAR} = \begin{pmatrix} \cos\left( \gamma_4 \right) \\ \sin\left( \gamma_4 \right) \end{pmatrix} \qquad \overrightarrow{TMI} = \begin{pmatrix} -\cos\left( \gamma_3 \right) \\ \sin\left( \gamma_3 \right) \end{pmatrix}$$

La condition d'optimalité se traduit alors par l'équation suivante :

$$\overrightarrow{\Omega AV} \cdot \overrightarrow{TAV} = 0$$

où :

- le point AV est le centre géométrique du train 416 ;
- TAV est le vecteur tangent à la trajectoire décrite par le centre géométrique du train 416 et ayant pour origine le point AV, lors d'une manoeuvre de braquage sur place ;
- $\Omega AV$ est le vecteur reliant le centre $\Omega$ au point AV.

Dans cet exemple, le vecteur TAV se note de la façon suivante :

$$\overrightarrow{TAV} = \begin{pmatrix} -(c+b) \times \sin(\gamma_3) - a \times \cos(\gamma_1) \times \dfrac{d\gamma_1}{d\gamma_3} \\[2ex] \dfrac{c \times \sin^2(\gamma_3)}{\cos(\gamma_3)} - b \times \cos(\gamma_3) + a \times \cos(\gamma_1) \times \dfrac{d\gamma_1}{d\gamma_3} \end{pmatrix}$$

La condition d'optimalité permet ainsi d'établir une équation différentielle permettant de définir l'angle $\gamma 1$ en fonction de l'angle $\gamma 3$. Cette équation différentielle est intégrable en fonction de la condition initiale $\gamma 1(\gamma 3=0) = 0$, qui correspond à la condition d'alignement du convoi 400.

L'angle $\varphi$ est alors défini par la relation suivante :

$$\varphi = -\mathrm{atan}\left( \dfrac{\dfrac{c \times \sin^2(\gamma_3)}{\cos(\gamma_3)} - b \times \cos(\gamma_3) + a \times \cos(\gamma_1) \times \dfrac{d\gamma_1}{d\gamma_3}}{-(c+b) \times \sin(\gamma_3) - a \times \cos(\gamma_1) \times \dfrac{d\gamma_1}{d\gamma_3}} \right) + \gamma_1$$

En prenant pour hypothèse que les angles $\gamma 1$, $\varphi$ et $\gamma 2$ sont petits, cette équation différentielle peut être résolue de façon approximée. On obtient alors les approximations suivantes, car dans ce cas les angles $\gamma 1$ à $\gamma 4$ sont eux aussi petits :

- $\gamma 2 = \gamma 3$ ;
- $\gamma 4 = \gamma 3 * c/d$ ;
- $b*\gamma 2 = a*\gamma 1$.

La résolution de cette équation dans ces conditions aboutit à la solution suivante :

- $\theta_1$ est égale à $\varphi*[d*(a+b)]/[a*d+a*b+a^2+b*d]$ et
- $\theta_2$ est égale à $\varphi*[a*(c+d)]/[a*d+a*b+a^2+b*d]$.

Les valeurs des consignes $c\theta_1$ et $c\theta_2$ sont donc ici choisies égales à, respectivement, $\varphi*[d*(a+b)]/[a*d+a*b+a^2+b*d]$ et $\varphi*[a*(c+d)]/[a*d+a*b+a^2+b*d]$. Dans ces conditions, en asservissant les angles $\theta_1$ et $\theta_2$ à ces valeurs de consigne, respectivement, $c\theta_1$ et $c\theta_2$ lors d'un braquage sur place ou en marche arrière, la trajectoire du train 416 est centrée sur le centre instantané de rotation $\Omega$ des trains 414 et 418.

Ainsi, le convoi 400 se conduit en marche arrière de façon simplifiée, dans la mesure où tous les trains de roues du convoi 400 ont une trajectoire centrée sur le même centre instantané de rotation $\Omega$, comme c'est le cas pour un véhicule automobile standard à deux essieux et dépourvu de dispositif d'articulation 30. Cette configuration réduit, voire supprime aussi l'inconvénient de la mise en portefeuille par rapport au reste du convoi que présenterait naturellement en marche arrière le train 418, en raison de son déport de chasse négatif, si les dispositifs 30 des véhicules 410 et 412 étaient libres de se mouvoir sans asservissement. La marche arrière du convoi 400 est ainsi facilitée, car le convoi 400 présente ainsi un risque moindre de se mettre en accordéon lors d'un braquage des roues du train 416, que ce braquage soit réalisé sur place ou pendant un déplacement en marche arrière. De plus, cet avantage est atteint sans qu'il soit nécessaire de faire riper les roues sur la route, c'est-à-dire sans avoir à faire glisser les roues perpendiculairement à leur trajectoire. On limite ainsi l'usure des pneumatiques des roues.

Dans cet exemple, la valeur de $\varphi$ est de préférence limitée au sein d'un intervalle prédéfini. Par exemple, la valeur de $\varphi$ est, en valeur absolue, inférieure ou égale à 20° ou à 15° ou à 10°.

Le calcul de $c\theta_1$ et $c\theta_2$ est ici réalisé en temps réel, que le convoi 400 soit immobile ou en déplacement en marche arrière. Lorsque le convoi 400 est en déplacement en marche arrière, ce calcul est réalisé en réactualisant les valeurs mesurées et calculées au fur et à mesure du déplacement du convoi 400 en fonction notamment de l'évolution de la valeur de $\varphi$. Ainsi, les valeurs de $c\theta_1$ et $c\theta_2$ sont recalculées puis transmises aux dispositifs 30 respectifs à divers instants au cours de la marche arrière du convoi 400. Par exemple, les valeurs de $c\theta_1$ et $c\theta_2$ sont réactualisées toutes les 10ms ou toutes les 100$\mu$s.

Avantageusement, l'unité 430 est apte à détecter si le convoi 400 est dans une position non alignée lorsque le conducteur du convoi 400 (c'est-à-dire, ici, le conducteur du véhicule 410 situé en tête du convoi 400) souhaite débuter une manoeuvre de marche arrière.

Dans ce cas, l'unité 430 est apte à empêcher la marche arrière tant que le convoi n'est pas dans une position alignée.

Un exemple d'un procédé de réalisation d'une marche arrière du convoi 400 va maintenant être décrit, en référence à l'organigramme de la figure 24 et à l'aide des figures 21 et 22.

Lors d'une étape 500, l'unité 430 vérifie automatiquement si le convoi est dans une position alignée. Par exemple, l'unité 430 collecte les valeurs des angles $\theta_1$ et $\theta_2$ mesurées par les capteurs 33B respectifs des dispositifs 30 des véhicules 410 et 412 et compare ces valeurs mesurées par rapport à des valeurs limite prédéfinies. Dans cet exemple, si au moins l'une des valeurs des angles $\theta_1$, $\theta_2$ et $\varphi$ mesurés est supérieure en valeur absolue à une valeur limite prédéfinie égale à 10° ou à 5° ou à 3° ou à 1° ; alors le convoi est considéré comme n'étant pas en position alignée.

Si le convoi 400 est considéré comme n'étant pas en position alignée, alors, la mise en marche arrière est inhibée tant que le convoi 400 n'est pas en position alignée. En effet, si on tente d'enclencher une marche arrière alors que le convoi est immobile et n'est pas aligné, on risque de provoquer un ripage important des pneumatiques des roues d'un des trains 414, 416 ou 418.

Ici, ensuite, lors d'une étape 502, le convoi 400 est automatiquement réaligné.

Si le convoi est considéré comme étant en position alignée, alors le procédé passe à l'étape 504.

Ensuite, une fois que le convoi 400 est dans la position alignée, l'unité 430 autorise le déplacement du convoi 400 en marche arrière, lors d'une étape 504.

Lors d'une étape 506, l'unité 430 asservit les angles $\theta_1$ et $\theta_2$. Cette étape 506 débute ici lorsque le convoi 400 est immobile dans la position alignée, puis se poursuit de façon concomitante au déplacement en marche arrière du convoi 400.

D'abord, les dispositifs 30 des véhicules 410 et 412 sont commandés par l'unité 430 pour accompagner un mouvement de braquage du convoi 400 imposé par le conducteur du convoi. Plus précisément, ici, l'unité 430 :

- collecte les valeurs actuelle de l'angle $\varphi$ mesurées par le capteur 97E ;
- calcule les valeurs de consignes $c\theta_1$ et $c\theta_2$ ;
- délivre des commandes aux dispositifs d'articulation 30 respectifs des véhicules 410 et 412 contenant notamment les valeurs de consigne. Par exemple, ici, un signal de commande contenant la valeur de consigne $c\theta_1$ est transmis à l'unité 33A du véhicule 410 et un signal de commande contenant la valeur de consigne $c\theta2$ est transmis à l'unité 33A du véhicule 412 par l'intermédiaire de la liaison 446 et de l'unité 432. L'unité 33A du dispositif 30 du véhicule 410 commande l'actionneur 33 du dispositif 30 auquel elle appartient, en fonction de l'angle $\theta_1$ mesuré par le capteur 33B pour que l'angle d'articulation $\theta_1$ soit égal à la valeur de consigne $c\theta_1$. Il en va de même pour l'unité 33A du dispositif 30 du véhicule 412, en référence à l'angle $\theta_2$ et à la valeur de consigne $c\theta_2$.

Ces étapes de collecte, calcul et de délivrance sont ici répétées à différents instants, aussi bien lorsque le convoi 400 est immobile que tant que le convoi 400 se déplacer en marche arrière.

Dans cet exemple, l'unité 432 joue un rôle passif, c'est-à-dire que les valeurs de consigne $c\theta_1$ et $c\theta_2$ sont uniquement calculées par l'unité 430. Cela est dû au fait que le véhicule 412 n'est pas en tête du convoi 400. L'unité 432 a ici uniquement pour fonction, tant que le véhicule 412 est attaché à l'arrière du véhicule 410, de relayer des signaux de commande de l'unité 430 vers le dispositif 30 du véhicule 412. A cet effet, chaque unité 430 ou 432 détermine préalablement, à l'aide du capteur 97B de position de l'attelage 34, si le véhicule auquel elle appartient est en tête du convoi ou non.

Enfin, lors d'une étape 508, la marche arrière s'arrête. Le convoi 400 peut alors s'immobiliser ou se déplacer en marche avant. Le convoi 400 peut également se déplacer à nouveau en marche arrière. Dans ce cas, l'étape 500 est à nouveau appliquée.

Les valeurs des consignes $c\theta_1$ et $c\theta_2$ qui permettent de maintenir les angles $\theta_1$ et $\theta_2$ sur des valeurs où la condition d'optimalité est satisfaite peuvent être calculées différemment. Par exemple, d'autres approximations que celles faites ci-dessus pour obtenir les formules qui donnent les valeurs des consignes $c\theta_1$ et $c\theta_2$ en fonction de l'angle $\varphi$ peuvent être réalisées. Généralement, quelle que soient les formules utilisées, les valeurs des consignes $c\theta_1$ et $c\theta_2$ sont égales, respectivement à $\varphi*[d*(a+b)]/[a*d+a*b+a^2+b*d]$ et $\varphi*[a*(c+d)]/[a*d+a*b+a^2+b*d]$ à 20 % près ou 10 % près ou 5 % près, pour des valeurs d'angle $\varphi$ faibles.

En variante, le convoi 400 comporte des véhicules non motorisés. Par exemple, le convoi 400 est formé d'un véhicule automobile et d'une remorque.

En variante, le véhicule 412 est dépourvu du dispositif 32.

Alternativement, les véhicules 410 et 412 peuvent présenter des différences, notamment dans leurs dimensions. Ainsi, les longueurs a et c peuvent être différentes. De même, les longueurs b et d peuvent être différentes.

En variante, les trains de roues, respectivement, arrière et avant des véhicules 410 et 412 ne sont pas emboîtés. Par exemple, ces trains de roues sont dans la configuration « en tandem » précédemment décrite. Dans ce cas, le train milieu est le train équivalent formé par ces trains en tandem.

En variante, les unités 430 et 432 sont configurées pour que l'unité 430 transmette la valeur de $\varphi$ à l'unité 432 et pour que cette unité 432 calcule la consigne $c\theta_2$ à partir de cette valeur de $\varphi$ transmise.

Avantageusement, l'unité 430 est apte commander un redressement du convoi 400 dans sa position alignée. A cet effet, l'unité 430 est notamment apte à collecter les valeurs d'angles mesurées par les capteurs 33B respectifs des dispositifs 30 des véhicules 410 et 412 et par le capteur 97E.

Les unités 430 et 432 peuvent être réalisées différemment. Par exemple, ces unités 430 et 432 sont réalisées au moyen d'un mécanisme mécanique tel qu'un renvoi de bielles, une chaîne, un câble ou encore une courroie. Ce mécanisme est dimensionné de façon à asservir les angles $\theta_1$ et $\theta_2$ aux valeurs de consigne $c\theta_1$ et $c\theta_2$.

La limitation de la valeur de $\varphi$ peut être réalisée différemment ou même omise.

En variante, l'angle 463 est défini comme ayant pour valeur la moyenne entre les valeurs des angles de braquage des deux roues 460 et 461. Lorsque le train de roues ne comporte qu'une seule roue, alors l'angle 463 est défini comme la valeur d'angle de braquage de cette roue. Il en va de même lorsque le train de roues comporte une direction de type diligence. En variante, cet angle 463 peut être estimé par l'implantation d'un capteur sur un dispositif mécanique reproduisant de façon approché la cinématique cet angle 463.

La réactualisation des valeurs mesurées et calculées par l'unité de commande peut être réalisée à des instants différents. Cette réactualisation peut aussi n'avoir lieu que lorsque le conducteur du convoi 400 manipule le volant 23.

L'asservissement pour réaliser la marche arrière peut également être mis en oeuvre lorsque le convoi 400 est à l'arrêt, en situation de marche arrière et que le conducteur braque sur place les roues du train 416. Le convoi 400 est dit être en situation de marche arrière lorsque le conducteur du convoi 400 a enclenché la marche arrière mais ne met pas en mouvement le convoi 400. Les étapes décrites en référence au déplacement du convoi en marche arrière peuvent ainsi s'appliquer lorsque le convoi 400 est à l'arrêt. Notamment, lors de l'étape 500, le volant 23 est inhibé tant que le convoi 400 est en situation de marche arrière mais n'est pas dans la position alignée. Lors de l'étape 504, l'unité 540 autorise en outre le déplacement du volant 23 pour braquer les roues sur place. Lors de l'étape 506, les opérations d'asservissement, de collecte, calcul et délivrance sont alors réitérées de façon concomitante à l'actionnement sur place du volant 23 par le conducteur du véhicule.

L'asservissement des angles d'articulation $\theta_1$ et $\theta_2$ pour réaliser une marche arrière tel que décrit ici en référence au convoi 400 peut être mis en oeuvre indépendamment des caractéristiques portant sur le caractère attelable des véhicules 410 et 412. Ainsi, cet asservissement peut être réalisé pour un convoi automobile routier dans lequel les véhicules 410 et 412 ne sont pas détachables ou ne sont pas aptes à circuler de façon autonome lorsqu'ils sont détachés l'un de l'autre. Par exemple, cet asservissement peut être mis en oeuvre dans tout véhicule automobile présentant trois trains de roues séparés deux à deux par des dispositifs d'articulations présentant les caractéristiques du dispositif 30. Par exemple, cet asservissement peut être mis en oeuvre dans un véhicule automobile tel qu'un train routier ou un autobus bi-articulé.

## Revendications

1. Procédé de commande d'un convoi automobile routier pour réaliser un déplacement en marche arrière, ce procédé comportant :

   - la fourniture d'un convoi automobile routier (400), ce convoi étant formé de premier et second véhicules (410, 412) attachés entre eux, le premier véhicule (410) étant placé en tête du convoi automobile (400), la tête du convoi désignant l'extrémité du convoi automobile vers laquelle se déplace le convoi automobile lorsque le convoi se déplace en marche avant, la marche avant correspondant à un sens de déplacement opposé à celui de la marche arrière, le second véhicule étant attaché derrière le premier véhicule,
le premier véhicule (410) comprenant :

- au moins trois roues (42, 44, 46), aptes à faire rouler le premier véhicule sur une route plane (22), réparties entre un trains avant (416) et un train milieu (414) de roues ;
- un premier châssis, comportant :

• une première partie avant (24) sur laquelle est fixée le train avant (416) ;
• une première partie arrière sur laquelle est fixée le train milieu (414) ;
• un premier dispositif d'articulation (30), interposé entre les premières parties avant et arrière du châssis, ce premier dispositif d'articulation permettant à la première partie avant de pivoter, par rapport à la première partie arrière, autour d'un premier axe d'articulation (39) normal à un plan de roulement du premier véhicule, de manière à modifier un angle d'articulation $\theta_1$ du premier véhicule, ce plan de roulement étant défini comme étant le plan passant par les surfaces de contact entre la route et les roues du premier véhicule ;

- un premier dispositif de direction (32), apte à modifier, en réponse à une commande d'un conducteur du premier véhicule, un angle de braquage $\varphi$ de chaque roue du train avant (416), ce premier dispositif de direction étant apte à être actionné indépendamment du premier dispositif d'articulation, ce premier dispositif de direction présentant un déport de chasse (D) strictement inférieur, en valeur absolue, au tiers de la plus petite distance séparant le premier axe d'articulation (39) d'un axe transversal du train avant (416) lorsque l'axe transversal du train avant (416) est parallèle à un axe transversal du train milieu (414), l'axe transversal d'un train de roues étant défini comme étant :

• l'axe passant par le centre géométrique de la surface de contact entre la route et les roues du train de roues lorsque ce train comporte plus d'une roue et que ces roues ne sont pas braquées, et
• l'axe parallèle à l'axe de roulement d'une roue et passant par le centre géométrique de la surface de contact entre la route et cette roue, si le train de roues comporte uniquement cette roue et que cette roue n'est pas braquée ;

le second véhicule (412) comprenant :

- au moins trois roues (42, 44, 46), aptes à faire rouler le second véhicule sur une route plane (22), réparties entre le trains milieu (414) et un train arrière (418) de roues ;
- un second châssis, comportant :

• une seconde partie avant (24) sur laquelle est fixée le train milieu (414);
• une seconde partie arrière sur laquelle est fixée le train arrière (418) ;
• un second dispositif d'articulation (30), interposé entre les secondes parties avant et arrière du second châssis, ce second dispositif d'articulation permettant à la seconde partie avant de pivoter, par rapport à la seconde partie arrière, autour d'un second axe d'articulation (39) normal à un plan de roulement du second véhicule, de manière à modifier un angle d'articulation $\theta_2$ du second véhicule, ce plan de roulement étant défini comme étant le plan passant par les surfaces de contact entre la route et les roues du second véhicule;

la seconde partie avant (24) étant attachée mécaniquement, sans degré de liberté en rotation en lacet, à la première partie arrière, et alignée avec la première partie arrière,
- le déplacement (504) du convoi en marche arrière ;
- le procédé comportant l'asservissement (506), pendant le déplacement en marche arrière, des premier et second dispositifs d'articulation des premier et second véhicules de manière à maintenir la trajectoire suivie par le centre géométrique du train avant (416) de roues du premier véhicule tangente à un cercle de giration dont le centre est situé à l'intersection des axes transversaux des trains de roues milieu et arrière (414, 418).

2. Procédé selon la revendication 1, dans lequel l'asservissement comprend :

• l'asservissement de l'angle d'articulation $\theta_1$ du premier véhicule (410) sur une consigne $c\theta_1$, la valeur de la

première consigne $c\theta_1$ étant égale en permanence à $\varphi*[d*(a+b)]/[a*d+a*b+a^2+b*d]$ à 20 % près avec :

- $\varphi$ est la valeur actuelle de l'angle de braquage des roues du train de roues avant (416) du premier véhicule, cet angle $\varphi$ étant, en valeur absolue, inférieur ou égal à 20° ;

- a et c sont, respectivement, les longueurs des première et seconde parties avant (24) des premier (410) et second (412) véhicules du convoi (400), la longueur a étant mesurée, pour le premier véhicule, entre le premier axe d'articulation (39) et le centre géométrique du train de roues avant (416) et la longueur c étant mesurée, pour le second véhicule, entre le second axe d'articulation (39) et le centre géométrique du train de roues milieu (414);
- b et d sont, respectivement, les longueurs des parties arrière (26) des premier (410) et second (412) véhicules du convoi (400), la longueur b étant mesurée, pour le premier véhicule, entre le premier axe d'articulation (39) et le centre géométrique du train de roues milieu (414) et la longueur d étant mesurée, pour le second véhicule, entre le second axe d'articulation (39) et le centre géométrique du train de roues arrière (418) ;
- et simultanément, l'asservissement de l'angle d'articulation $\theta_2$ du second véhicule (412) sur une consigne $c\theta_2$, la valeur de la seconde consigne $c\theta_2$ étant égale en permanence à $\varphi*[a*(c+d)]/[a*d+a*b+a^2+b*d]$ à 20 % près.

3. Procédé selon l'une quelconque des revendications précédentes, dans lequel :

- le premier et le second véhicules comportent également chacun des attelages avant (34) et arrière (36), situés, respectivement, à l'avant et à l'arrière du véhicule automobile,
l'attelage avant (34) étant déplaçable, en alternance, entre :

- une position attelée, dans laquelle cet attelage avant coopère avec un attelage arrière (60), identique à l'attelage arrière de ce véhicule et situé sur un autre véhicule, pour attacher mécaniquement, sans degré de liberté en rotation en lacet, ces véhicules entre eux, et aligner la partie avant de ce véhicule avec la partie arrière de l'autre véhicule, et
- une position dételée, dans laquelle ces véhicules sont détachés l'un de l'autre ;

l'attelage arrière (36) étant déplaçable, en alternance, entre :

- une position attelée, dans laquelle cet attelage arrière coopère avec un attelage avant (66), identique à l'attelage avant de ce véhicule et situé sur un autre véhicule, pour attacher mécaniquement, sans degré de liberté en rotation en lacet, ces véhicules entre eux et aligner la partie arrière de ce véhicule avec la partie avant de l'autre véhicule, et
- une position dételée, dans laquelle ces véhicules sont détachés l'un de l'autre,

- les premier et second véhicules sont attachés deux à deux au moyen des attelages avant et arrière respectifs de ces véhicule.

4. Procédé selon la revendication 3, dans lequel le second véhicule comporte :

- un second dispositif de direction (32), apte à modifier, en réponse à une commande d'un conducteur du second véhicule (412), un second angle de braquage ($\varphi$) de chaque roue d'un second train avant qui, lorsque le second véhicule est attaché à l'arrière du premier véhicule, forme avec un train arrière du premier véhicule ledit train milieu (414), ce second dispositif de direction étant apte à être actionné indépendamment du second dispositif d'articulation, ce second dispositif de direction présentant un déport de chasse (D) strictement inférieur, en valeur absolue, au tiers de la plus petite distance séparant le second axe d'articulation de l'axe transversal du train milieu (414) lorsque l'axe transversal du train milieu est parallèle à l'axe transversal du train arrière (418), et
- le premier ou le second véhicule comporte un dispositif de maintien (34A) du second angle de braquage de chaque roue du second train avant du second véhicule (412), lorsqu'il est attaché derrière le premier véhicule (410), à sa valeur nulle, tant que ce second véhicule est attaché derrière le premier véhicule.

5. Procédé selon l'une quelconque des revendications précédentes, dans lequel chaque dispositif d'articulation (30) comporte une articulation mécanique (31) incluant une liaison pivot selon l'axe d'articulation (39), cet axe d'articulation étant positionné à égale distance des axes transversaux (48, 50) des trains de roues avant (418) et milieu (414) dans le cas du premier dispositif d'articulation et à égale distance des axes transversaux (48, 50) des trains de roues milieu (414) et arrière (418) dans le cas du second dispositif d'articulation.

**6.** Procédé selon l'une quelconque des revendications précédentes, dans laquelle :

- chaque dispositif d'articulation (280) comporte des première (252) et seconde (282) poutres s'étendant chacune, parallèlement au plan de roulement du véhicule (20), entre deux extrémités respectivement ancrées aux parties avant et arrière du véhicule par des points d'ancrage (254, 256, 284, 286) comportant chacun une liaison pivot dont l'axe de rotation est perpendiculaire au plan de roulement, ces première et seconde poutres étant croisées l'une par rapport à l'autre au niveau de l'axe d'articulation et présentant, lorsque les parties avant (24) et arrière (26) de châssis sont alignées, une symétrie de réflexion par rapport à un plan vertical (283),
- dans le cas du premier véhicule, ce plan vertical passant par le premier axe d'articulation (39) et étant parallèle à l'axe transversal du train milieu (414) de roues, le premier axe d'articulation étant positionné à équidistance des axes transversaux des trains avant (416) et milieu (414) de roues, et
- dans le cas du second véhicule, ce plan vertical passant par le second axe d'articulation (39) et étant parallèle à l'axe transversal du train arrière (418) de roues, le second axe d'articulation étant positionné à équidistance des axes transversaux des trains milieu (414) et arrière (418) de roues.

**7.** Procédé selon l'une quelconque des revendications précédentes, dans lequel :

- le train avant comporte deux roues (301, 302) ;
- le dispositif de direction comporte une direction Ackermann (300) apte à modifier l'angle de braquage de ces roues.

**8.** Procédé selon l'une quelconque des revendications 1 à 7, dans lequel :

- le train avant comporte une unique roue (42) ;
- le dispositif de direction (32) comporte une barre de direction (92) reliée mécaniquement à un moyeu (94) de la roue et un palier (96) à l'intérieur duquel la barre de direction pivote.

**Patentansprüche**

**1.** Verfahren zum Steuern einer Straßenfahrzeugkolonne, um eine Bewegung im Rückwärtsgang durchzuführen, wobei dieses Verfahren aufweist:

- die Bereitstellung einer Straßenfahrzeugkolonne (400), wobei diese Kolonne von aneinander befestigten ersten und zweiten Fahrzeugen (410, 412) gebildet wird, wobei das erste Fahrzeug (410) sich an der Spitze der Fahrzeugkolonne (400) befindet, wobei die Spitze der Kolonne das Ende der Fahrzeugkolonne bezeichnet, zu dem die Fahrzeugkolonne sich bewegt, wenn die Kolonne sich im Vorwärtsgang bewegt, wobei der Vorwärtsgang einer Bewegungsrichtung entgegengesetzt zu derjenigen des Rückwärtsgangs entspricht, wobei das zweite Fahrzeug hinter dem ersten Fahrzeug befestigt ist,

wobei das erste Fahrzeug (410) enthält:

- mindestens drei Räder (42, 44, 46), die das erste Fahrzeug auf einer ebenen Straße (22) fahren lassen können, verteilt zwischen einem vorderen Radsatz (416) und einem mittleren Radsatz (414);
- ein erstes Fahrwerk, das aufweist:

  • einen ersten vorderen Teil (24), an dem der vordere Radsatz (416) befestigt ist;
  • einen ersten hinteren Teil, an dem der mittlere Radsatz (414) befestigt ist;
  • eine erste Gelenkvorrichtung (30), die zwischen die ersten vorderen und hinteren Teile des Fahrwerks eingefügt ist, wobei diese erste Gelenkvorrichtung es dem ersten vorderen Teil ermöglicht, bezüglich des ersten hinteren Teils um eine erste Gelenkachse (39) orthogonal zu einer Fahrebene des ersten Fahrzeugs zu schwenken, um einen Gelenkwinkel $\theta_1$ des ersten Fahrzeugs zu ändern, wobei diese

Fahrebene als die Ebene definiert wird, die durch die Kontaktflächen zwischen der Straße und den Rädern des ersten Fahrzeugs verläuft;
- eine erste Lenkvorrichtung (32), die als Reaktion auf einen Befehl eines Fahrers des ersten Fahrzeugs einen Einschlagwinkel $\varphi$ jedes Rads des vorderen Radsatzes (416) ändern kann, wobei diese erste Lenkvorrichtung unabhängig von der ersten Gelenkvorrichtung betätigt werden kann, wobei diese erste Lenkvorrichtung einen Nachlaufversatz (D) aufweist, der im Absolutwert strikt geringer ist als das Drittel des kleinsten Abstands, der die erste Gelenkachse (39) von einer Querachse des vorderen Radsatzes (416) trennt, wenn die Querachse des vorderen Radsatzes (416) parallel zu einer Querachse des mittleren Radsatzes (414) ist, wobei die Querachse eines Radsatzes definiert wird als:

    • die durch die geometrische Mitte der Kontaktfläche zwischen der Straße und den Rädern des Radsatzes verlaufende Achse, wenn dieser Radsatz mehr als ein Rad aufweist und wenn diese Räder nicht eingeschlagen sind, und
    • die Achse parallel zur Fahrachse eines Rads und durch die geometrische Mitte der Kontaktfläche zwischen der Straße und diesem Rad verlaufend, wenn der Radsatz nur dieses Rad aufweist und wenn dieses Rad nicht eingeschlagen ist;

wobei das zweite Fahrzeug (412) enthält:

- mindestens drei Räder (42, 44, 46), die das zweite Fahrzeug auf einer ebenen Straße (22) fahren lassen können, die zwischen dem mittleren Radsatz (414) und einem hinteren Radsatz (418) verteilt sind;
- ein zweites Fahrwerk, das aufweist:

    • einen zweiten vorderen Teil (24), an dem der mittlere Radsatz (414) befestigt ist;
    • einen zweiten hinteren Teil, an dem der hintere Radsatz (418) befestigt ist;
    • eine zweite Gelenkvorrichtung (30), die zwischen die zweiten vorderen und hinteren Teile des zweiten Fahrwerks eingefügt ist, wobei diese zweite Gelenkvorrichtung es dem zweiten vorderen Teil ermöglicht, bezüglich des zweiten hinteren Teils um eine zweite Gelenkachse (39) orthogonal zu einer Fahrebene des zweiten Fahrzeugs zu schwenken, um einen Gelenkwinkel $\theta_2$ des zweiten Fahrzeugs zu ändern, wobei diese Fahrebene definiert wird als die Ebene, die durch die Kontaktflächen zwischen der Straße und den Rädern des zweiten Fahrzeugs verläuft;

wobei der zweite vordere Teil (24) mechanisch ohne Gierdrehfreiheitsgrad am ersten hinteren Teil befestigt und mit dem ersten hinteren Teil fluchtend ausgerichtet ist,

- die Bewegung (504) der Kolonne im Rückwärtsgang;

wobei das Verfahren die Regelung (506), während der Bewegung im Rückwärtsgang, der ersten und zweiten Gelenkvorrichtungen des ersten und des zweiten Fahrzeugs aufweist, um die von der geometrischen Mitte des vorderen Radsatzes (416) des ersten Fahrzeugs verfolgte Bahn einen Drehkreis tangierend zu halten, dessen Mitte sich am Schnittpunkt der Querachsen der mittleren und hinteren Radsätze (414, 418) befindet.

**2.** Verfahren nach Anspruch 1, wobei die Regelung enthält:

    • die Regelung des Gelenkwinkels $\theta_1$ des ersten Fahrzeugs (410) auf einen Sollwert $c\theta_1$, wobei der Wert des ersten Sollwerts $c\theta_1$ bis auf 20% ständig gleich $\varphi*[d*(a+b)]/[a*d+a*b+a^2+b*d]$ ist, mit:

        • $\varphi$ dem aktuellen Wert des Einschlagwinkels der Räder des vorderen Radsatzes (416) des ersten Fahrzeugs, wobei dieser Winkel $\varphi$ im Absolutwert niedriger als oder gleich 20° ist;

    • a und c den Längen des ersten und zweiten vorderen Teils (24) des ersten (410) bzw. zweiten (412) Fahrzeugs der Kolonne (400), wobei die Länge a für das erste Fahrzeug zwischen der ersten Gelenkachse (39) und der geometrischen Mitte des vorderen Radsatzes (416) gemessen wird, und die Länge c für das zweite Fahrzeug zwischen der zweiten Gelenkachse (39) und der geometrischen Mitte des mittleren Radsatzes (414) gemessen wird;
    • b und d den Längen der hinteren Teile (26) des ersten (410) bzw. zweiten (412) Fahrzeugs der Kolonne (400), wobei die Länge b für das erste Fahrzeug zwischen der ersten Gelenkachse (39) und der geometrischen Mitte des mittleren Radsatzes (414) gemessen wird, und die Länge d für das zweite Fahrzeug zwischen der zweiten Gelenkachse (39) und der geometrischen Mitte des hinteren Radsatzes (418) gemessen wird;
    • und gleichzeitig die Regelung des Gelenkwinkels $\theta_2$ des zweiten Fahrzeugs (412) auf einen Sollwert $c\theta_2$, wobei der Wert des zweiten Sollwerts $c\theta_2$ bis auf 20% ständig gleich $\varphi*[a*(c+d)]/[a*d+a*b+a^2+b*d]$ ist.

**3.** Verfahren nach einem der vorhergehenden Ansprüche, wobei:

- das erste und das zweite Fahrzeug ebenfalls je vordere (34) und hintere (36) Kupplungen aufweisen, die sich vorne bzw. hinten am Kraftfahrzeug befinden,

wobei die vordere Kupplung (34) abwechselnd verschiebbar ist zwischen:

• einer angekuppelten Stellung, in der diese vordere Kupplung mit einer hinteren Kupplung (60) gleich der hinteren Kupplung dieses Fahrzeugs und auf einem anderen Fahrzeug befindlich zusammenwirkt, um diese Fahrzeuge mechanisch ohne Gierdrehfreiheitsgrad aneinander zu befestigen und den vorderen Teil dieses Fahrzeugs mit dem hinteren Teil des anderen Fahrzeugs fluchtend auszurichten, und
• einer abgekuppelten Stellung, in der diese Fahrzeuge voneinander gelöst sind;

wobei die hintere Kupplung (36) abwechselnd verschiebbar ist zwischen:

• einer angekuppelten Stellung, in der diese hintere Kupplung mit einer vorderen Kupplung (66) gleich der vorderen Kupplung dieses Fahrzeugs und auf einem anderen Fahrzeug befindlich zusammenwirkt, um diese Fahrzeuge ohne Gierdrehfreiheitsgrad aneinander zu befestigen und den hinteren Teil dieses Fahrzeugs mit dem vorderen Teil des anderen Fahrzeugs fluchtend auszurichten, und
• einer abgekuppelten Stellung, in der diese Fahrzeuge voneinander gelöst sind,
- wobei das erste und das zweite Fahrzeug paarweise mittels der vorderen bzw. hinteren Kupplungen dieser Fahrzeuge befestigt sind.

4. Verfahren nach Anspruch 3, wobei das zweite Fahrzeug aufweist:

- eine zweite Lenkvorrichtung (32), die als Reaktion auf einen Befehl eines Fahrers des zweiten Fahrzeugs (412) einen zweiten Einschlagwinkel ($\varphi$) jedes Rads eines zweiten vorderen Radsatzes ändern kann, der, wenn das zweite Fahrzeug an der Rückseite des ersten Fahrzeugs befestigt ist, mit einem hinteren Radsatz des ersten Fahrzeugs den mittleren Radsatz (414) bildet, wobei diese zweite Lenkvorrichtung unabhängig von der zweiten Gelenkvorrichtung betätigt werden kann, wobei diese zweite Lenkvorrichtung einen Nachlaufversatz (D) aufweist, der im Absolutwert strikt niedriger als ein Drittel des kleinsten Abstands ist, der die zweite Gelenkachse von der Querachse des mittleren Radsatzes (414) trennt, wenn die Querachse des mittleren Radsatzes parallel zur Querachse des hinteren Radsatzes (418) ist, und
- das erste oder das zweite Fahrzeug eine Vorrichtung (34A) zum Halten des zweiten Einschlagwinkels jedes Rads des zweiten vorderen Radsatzes des zweiten Fahrzeugs (412), wenn es hinter dem ersten Fahrzeug (410) befestigt ist, auf seinem Wert Null aufweist, so lange dieses zweite Fahrzeug hinter dem ersten Fahrzeug befestigt ist.

5. Verfahren nach einem der vorhergehenden Ansprüche, wobei jede Gelenkvorrichtung (30) ein mechanisches Gelenk (31) aufweist, das eine Drehzapfenverbindung gemäß der Gelenkachse (39) umfasst, wobei diese Gelenkachse im Fall der ersten Gelenkvorrichtung in gleichem Abstand zu den Querachsen (48, 50) des vorderen (418) und mittleren (414) Radsatzes und im Fall der zweiten Gelenkvorrichtung in gleichem Abstand zu den Querachsen (48, 50) des mittleren (414) und hinteren (418) Radsatzes positioniert ist.

6. Verfahren nach einem der vorhergehenden Ansprüche, wobei:

- jede Gelenkvorrichtung (280) erste (252) und zweite (282) Balken aufweist, die sich je parallel zur Fahrebene des Fahrzeugs (20) zwischen zwei Enden erstrecken, die am vorderen bzw. hinteren Teil des Fahrzeugs durch Verankerungspunkte (254, 256, 284, 286) verankert sind, die je eine Drehzapfenverbindung aufweisen, deren Drehachse lotrecht zur Fahrebene ist, wobei dieser erste und zweite Balken sich im Bereich der Gelenkachse kreuzen und, wenn der vordere (24) und hintere (26) Teil des Fahrwerks fluchtend ausgerichtet sind, eine Reflexionssymmetrie bezüglich einer senkrechten Ebene (283) aufweisen,
- im Fall des ersten Fahrzeugs diese senkrechte Ebene durch die erste Gelenkachse (39) verläuft und zur Querachse des mittleren Radsatzes (414) parallel ist, wobei die erste Gelenkachse in gleichem Abstand zu den Querachsen der vorderen (416) und mittleren (414) Radsätze positioniert ist, und
- im Fall des zweiten Fahrzeugs diese senkrechte Ebene durch die zweite Gelenkachse (39) verläuft und zur Querachse des hinteren Radsatzes (418) parallel ist, wobei die zweite Gelenkachse in gleichem Abstand zu den Querachsen des mittleren (414) und hinteren (418) Radsatzes positioniert ist.

7. Verfahren nach einem der vorhergehenden Ansprüche, wobei:

- der vordere Radsatz zwei Räder (301, 302) aufweist;
- die Lenkvorrichtung eine Ackermann-Lenkauslegung (300) aufweist, die den Einschlagwinkel dieser Räder ändern kann.

8. Verfahren nach einem der Ansprüche 1 bis 7, wobei:

- der vordere Radsatz ein einziges Rad (42) aufweist;
- die Lenkvorrichtung (32) eine Lenkstange (92) aufweist, die mechanisch mit einer Nabe (94) des Rads und einem Lager (96) verbunden ist, in dessen Innerem die Lenkstange schwenkt.

**Claims**

1. Method for controlling a convoy of road motor vehicles in order to perform a reverse movement, said method comprising:

- providing a convoy (400) of road motor vehicles, said convoy being formed by first and second vehicles (410, 412) attached together, the first vehicle (410) being placed at the front end of the motor vehicle convoy (400), the front end of the convoy referring to the end of the motor vehicle convoy towards which the motor vehicle convoy moves when the convoy moves forwards, the forward movement corresponding to a direction of movement opposite to that of the reverse movement, the second vehicle being attached behind the first vehicle,

the first vehicle (410) comprising:

- at least three wheels (42, 44, 46) suitable for allowing travel of the first vehicle on a flat road (22) and distributed between a front wheel train (416) and a middle wheel train (414);
- a first chassis comprising:

   • a first front part (24) on which the front train (416) is fixed;
   • a first rear part on which the middle train (414) is fixed;
   • a first articulation device (30), arranged between the first front and rear parts of the chassis, said first articulation device allowing the first part to pivot, with respect to the first rear part, about a first articulation axis (39) perpendicular to a travel plane of the first vehicle, so as to modify an angle of articulation $\theta_1$ of the first vehicle, said travel plane being defined as the plane passing through the contact surfaces of the road and the wheels of the first vehicle;

- a first steering device (32) designed to modify, in response to a command of a driver of the first vehicle, a steering angle $\varphi$ of each wheel of the front train (416), said first steering device being able to be operated independently of the first articulation device, said first steering device having a caster offset (D) which is strictly less, in absolute value, than a third of the smallest distance separating the first articulation axis (39) from a transverse axis of the front train (416) when the transverse axis of the front train (416) is parallel to a transverse axis of the middle train (414), the transverse axis of a wheel train being defined as being:

   • the axis passing though the geometric centre of the contact surface of the road and the wheels of the wheel train when said train has more than one wheel and said wheels are not steered, and
   • the axis parallel to the rolling axis of a wheel and passing through the geometric centre of the contact surface of the road and said wheel, if the wheel train comprises solely said wheel and said wheel is not steered;

the second vehicle (412) comprising:

- at least three wheels (42, 44, 46) suitable for allowing travel of the second vehicle on a flat road (22) and distributed between the middle wheel train (414) and a rear wheel train (418);
- a second chassis comprising:

   • a second front part (24) on which the middle train (414) is fixed;
   • a second rear part on which the rear train (418) is fixed;
   • a second articulation device (30) arranged between the second front and rear parts of the second chassis, said second articulation device allowing the second front part to pivot, with respect to the second rear part, about a second articulation axis (39) perpendicular to a travel plane of the second vehicle, so as to modify an angle of articulation $\theta_2$ of the second vehicle, said travel plane being defined as being the plane passing through the contact surfaces of the road and the wheels of the second vehicle;

the second front part (24) being attached mechanically, without any degree of freedom of twisting rotation, to the first rear part and aligned with the first rear part,

- the movement (504) of the convoy in reverse;
- the method comprising the automatic control (506), during the reverse movement, of the first and second articulation devices of the first and second vehicles so as to maintain the trajectory followed by the geometric centre of the front wheel train (416) of the first vehicle tangential to a circle of rotation, the centre of which is situated at the intersection of the transverse axes of the middle wheel train and rear wheel train (414, 418).

2. Method according to Claim 1, wherein the automatic control comprises:

• the automatic control of the angle of articulation $\theta_1$ of the first vehicle (410) in relation to a set value $c\theta_1$, the value of the first set value $c\theta_1$ being equal permanently to $\varphi*[d*(a+b)]/[a*d+a*b+a^2+b*d]$ at about 20% where:

• $\varphi$ is the current value of the steering angle of the wheels of the front wheel train (416) of the first vehicle, said angle $\varphi$ being, in absolute value, less than or equal to 20°;

• a and c are, respectively, the lengths of the first and second front parts (24) of the first vehicle (410) and second vehicle (412) of the convoy (400), the length a being measured, for the first vehicle, between the first articulation axis (39) and the geometric centre of the front wheel train (416) and the length c being measured, for the second vehicle, between the second articulation axis (39) and the geometric centre of the middle wheel train (414);
• b and d are, respectively, the lengths of the rear parts (26) of the first vehicle (410) and second vehicle (412) of the convoy (400), the length b being measured, for the first vehicle, between the first articulation axis (39) and the geometric centre of the middle wheel train (414) and the length d being measured, for the second vehicle, between the second articulation axis (39) and the geometric centre of the rear wheel train (418);
• and simultaneously, the automatic control of the angle of articulation $\theta_2$ of the second vehicle (412) in relation to a set value $c\theta_2$, the value of the second set value $c\theta_2$ being equal permanently to $\varphi*[a*(c+d)]/[a*d+a*b+a^2+b*d]$ at about 20%.

3. Method according to any one of the preceding claims, wherein:

- the first and second vehicles also each comprise a front hitching device (34) and a rear hitching device (36) situated, respectively, at the front and at the rear of the motor vehicle,

the front hitching device (34) being displaceable, alternately, between:

• a hitched position, in which said front hitching device cooperates with a rear hitching device (60), identical to the rear hitching device of said vehicle and situated on another vehicle, so as to attach mechanically, without any degree of freedom of twisting rotation, said vehicles together and align the front part of said vehicle with the rear part of the other vehicle, and
• an unhitched position, in which said vehicles are detached from each other;

the rear hitching device (36) being displaceable alternately, between:

• a hitched position, in which said rear hitching device cooperates with a front hitching device (66), identical to the front hitching device of said vehicle and situated on another vehicle, so as to attach mechanically, without any degree of freedom of twisting rotation, said vehicles together and align the rear part of said vehicle with the front part of the other vehicle, and
• an unhitched position, in which said vehicles are detached from each other,
- the first and second vehicles are attached in pairs by means of respective front and rear hitching devices of said vehicles.

4. Method according to Claim 3, wherein the second vehicle comprises:

- a second steering device (32) designed to modify, in response to a command of a driver of the second vehicle (412), a second steering angle ($\varphi$) of each wheel of a second front train which, when the second vehicle is attached to the rear of the first vehicle, forms with a rear train of the first vehicle the said middle train (414), said second steering device being able to be operated independently of the second articulation device, said second steering device having a caster offset (D) which is strictly less, in absolute value, than a third of the smallest distance separating the second articulation axis from the transverse axis of the middle train (414) when the transverse axis of the middle train is parallel to the transverse axis of the rear train (418), and

- the first or the second vehicle comprises a device (34A) for keeping the second steering angle of each wheel of the second front train of the second vehicle (412) when it is attached behind the first vehicle (410), at its zero value, while said second vehicle is attached behind the first vehicle.

5. Method according to any one of the preceding claims, wherein each articulation device (30) comprises a mechanical articulation (31) including a pivot connection along the articulation axis (39), said articulation axis being positioned at the same distance from the transverse axes (48, 50) of the front wheel train (418) and the middle wheel train (414) in the case of the first articulation device and at the same distance from the transverse axes (48, 50) of the middle wheel train (414) and rear wheel train (418) in the case of the second articulation device.

6. Method according to any one of the preceding claims, wherein:

- each articulation device (280) comprises a first beam (252) and second beam (282) each extending, parallel to the plane of travel of the vehicle (20), between two ends respectively anchored to the front and rear parts of the vehicle by anchoring points (254, 256, 284, 286) each comprising a pivot connection, the axis of rotation of which is perpendicular to the plane of travel, said first and second beams crossing each other at the articulation axis and having, when the front part (24) and the rear part (26) of the chassis are aligned, a mirror symmetry in relation to a vertical plane (283),

- in the case of the first vehicle, said vertical plane passing through the first articulation axis (39) and being parallel to the transverse axis of the middle wheel train (414), the first articulation axis being positioned equidistant from the transverse axes of the front wheel train (416) and middle wheel train (414), and

- in the case of the second vehicle, said vertical plane passing through the second articulation axis (39) and being parallel to the transverse axis of the rear wheel train (418), the second articulation axis being positioned equidistant from the transverse axes of the middle wheel train (414) and rear wheel train (418).

7. Method according to any one of the preceding claims, wherein:

- the front train comprises two wheels (301, 302);

- the steering device comprises an Ackermann steering (300) designed to modify the steering angle of said wheels.

8. Method according to any one of Claims 1 to 7, wherein:

- the front train comprises a single wheel (42);

- the steering device (32) comprises a steering bar (92) connected mechanically to a hub (94) of the wheel and a bearing (96) inside which the steering bar pivots.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

**Fig. 17**

**Fig. 18**

**Fig. 19**

**Fig. 20**

Fig. 21

Fig. 22

Fig. 23

Fig. 24

**EP 3 190 008 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1046574 B1, WILLIAM M.C. RENDALL
- WO 200710062 A2, RENDALL WILLIAM MICHAEL
- US 5417300 A, SCHULTZ RICHARD E
- WO 9840263 A, TOIT CHARL WILHELMUS DU
- US 3294418 A, T.A. MIDDLESWORTH